# EUROPÄISCHE PATENTSCHRIFT

(11) **EP 1 853 125 B1**
(45) Veröffentlichungstag und Bekanntmachung des Hinweises auf die Patenterteilung: **10.11.2010**
(21) Anmeldenummer: 06701527.1
(22) Anmeldetag: 02.02.2006
(51) Int. Cl.: A23N 17/00, A23P 1/12, A23K 1/00

(54) **VERFAHREN UND ANLAGE ZUR HERSTELLUNG STÄRKE-, FETT- ODER PROTEINBASIERTER NAHRUNGS- ODER FUTTERMITTEL MIT DEFINIERTEM SCHÜTTGEWICHT**
METHOD AND PLANT FOR THE PRODUCTION OF STARCH- FAT- OR PROTEIN-BASED HUMAN OR ANIMAL FOODSTUFFS WITH DEFINED BULK DENSITY
PROCEDE ET INSTALLATION POUR PRODUIRE DES ALIMENTS OU DES PRODUITS D'ALIMENTATION ANIMALE A BASE D'AMIDON, DE GRAISSES OU DE PROTEINES, DE DENSITE EN VRAC DEFINIE

(30) Priorität: 03.03.2005 DE 102005010315
(43) Veröffentlichungstag der Anmeldung: 14.11.2007
(73) Patentinhaber: Bühler AG, 9240 Uzwil (CH)
(72) Erfinder: RUTISHAUSER, Stefan, CH-9000 St.gallen (CH); MEYER,Markus, CH-9322 Egnach (CH); MUNZ, Konrad, CH-9215 Schönenberg (CH)
(74) Vertreter: Wilming, Martin
(86) Internationale Anmeldenummer: PCT/CH2006/000067
(87) Internationale Veröffentlichungsnummer: WO 2006/092070

(56) Entgegenhaltungen:
- CH-A- 686 396
- DE-A1- 19 714 713
- FR-A- 2 658 393
- US-A- 5 700 510
- US-A- 5 714 187

## Beschreibung

Die Erfindung bezieht sich auf eine Anlage und ein Verfahren zur kontinuierlichen Herstellung stärke-, fett- oder proteinbasierter, schüttgutartiger Nahrungs- oder Futtermittel oder technischer Zwischenprodukte aus einer stärke-, fett- oder proteinbasierten Wasser aufweisenden Masse gemäss dem Oberbegriff von Anspruch 1 bzw. Anspruch 30.

Bei der Herstellung stärke-, fett- oder proteinbasierter Nahrungs- oder Futtermittel oder technischer Zwischenprodukte aus einer stärke-, fett- oder proteinbasierten Wasser aufweisenden Masse sind im wesentlichen zwei Parameter für die Produktqualität von grosser Bedeutung. Dabei handelt es sich einerseits um die in das Produkt während des Verfahrens eingetragene spezifische mechanische Energie (SME) und andererseits um das Schüttgewicht bzw. die Pellet-Dichte des hergestellten Produkts.

Bekannte Verfahren zur Herstellung der eingangs genannten Produkte verwenden hier für z.B. einen oder mehrere Extruder. Dabei wird die SME dem Produkt im Prozessraum des Extruders über sich drehende Schneckenwellen durch Scherkräfte zugeführt. Die hier verwendeten Extruder weisen in der Regel einen Einzugsbereich, einen Prozessbereich und einen Formgebungsbereich auf.

Die US 5 714 187 beschreibt ein Verfahren und eine Anlage zur Steuerung der Qualität eines gekneteten und formgepressten Futtermittels. Die Anlage enthält eine Schneckenpresse und optional eine Würfelpresse. Die verschiedenen Prozessbereiche der Anlage sind mit Sensoren ausgestaltet, um eine Vielzahl von Produkteigenschaften zu erfassen. Auf der Basis dieser erfassten Produkteigenschaften wurden Einstellungen (Einstellparameter) an den das Futtermittel herstellenden Vorrichtungen der Anlage verändert. Diese Veränderung der Einstellparameter erfolgt entweder manuell nach dem Prinzip "Versuch und Fehlversuch" oder automatisch aufgrund eines empirisch ermittelten und statisch ausgewerteten Rezeptes. Von einer isolierten Beeinflussung des Füllgrades eines Extruders ohne Veränderung der anderen Prozessparameter ist hier jedoch nicht die Rede.

Die DE 19714713 beschreibt eine Vorrichtung zur Behandlung von Futtermitteln mit einem Expansionsgehäuse, das Druckaufbau- und Entspannungszonen sowie einen Materialeingang und Einlassdüsen für Wasserdampf und eine Schnecke mit unterschiedlich ausgebildeten Bereichen für den Druckaufbau, das Pressen und die Expansion aufweist. Die hier beschriebene Vorrichtung besitzt auch ein Stauelement oder Sperrteil, das die Schnecke umgibt und eine Verengung in Form einer Ringspaltes bildet, wodurch ein Austreten von Dampf über den Materialeingang verhindert wird. Von einer Messvorrichtung zur Bestimmung von Produktparametern und einer von den Produktparametern abhängigen Austeuerung einer einstellbaren Barriere über eine Austeuerungsvorrichtung ist jedoch keine Rede.

Die SME wird durch die folgenden Prozess- und Systemparameter (Prozessgrössen) beeinflusst:
➢ Rohmaterialeigenschaften (Rezeptur)
➢ Feuchtigkeit (Produktfeuchte)
➢ Konfiguration der Extruderschnecken
➢ Schneckendrehzahl
➢ Füllgrad.

In der Regel sind die Rohmaterialeigenschaften bzw. das Rezept vorgegeben und können daher grundsätzlich nicht beeinflusst werden.

Die Beeinflussung der SME über die Feuchtigkeit (Produktfeuchte) ist teuer, da dem Produkt zusätzlich hinzugegebenes Wasser in einer anschliessenden Trocknung unter zusätzliche Energieaufwand wieder entfernt werden muss.

Eine Anpassung der Schneckenkonfiguration ist mit Umbauarbeiten zumindest an den Schneckenwellen verbunden und ist sehr aufwändig.

Eine Veränderung der Schneckendrehzahl führt zu einer Veränderung des Durchsatzes. In der Regel wird aber beim Drehzahl-Maximum gearbeitet, um einen maximalen Durchsatz zu erzielen. Eine Verringerung der Drehzahl würde daher zu Durchsatzeinbussen führen.

Somit bleibt lediglich die Beeinflussung des Füllgrades. Bei den bisher bekannten extruder-basierten Verfahren ist jedoch eine Beeinflussung des Füllgrades ohne eine Veränderung der anderen Prozessgrössen nicht möglich.

Eine Anpassung bzw. Einstellung der SME, ohne die genannten anderen Prozessgrössen verändern zu müssen, ist somit praktisch unmöglich.

Der Erfindung liegt die Aufgabe zugrunde, bei der eingangs genannten Anlage bzw. dem eingangs genannten Verfahren eine Anpassung bzw. Einstellung der SME und eine Überwachung und Steuerung der Schüttdichte bzw. der Dichte (Pellet-Dichte) des Produktes ohne Veränderung anderer Prozessgrössen zu ermöglichen.

Diese Aufgabe wird durch die Anlage und das Verfahren gemäss Anspruch 1 bzw. Anspruch 30 erfindungsgemäss gelöst.

Die erfindungsgemässe Anlage weist folgende aufeinanderfolgenden Bereiche auf, entlang derer die Masse förderbar ist:
➢ einen ersten Bereich mit einem ersten Prozessraum, in welchem eine Durchmischung der Masse erfolgt und in die Masse mechanische und/oder thermische Energie eingetragen wird;
➢ einen zweiten Bereich mit einem zweiten Prozessraum, in welchem ein Druckaufbau in der Masse erfolgt; und
➢ einen dritten Bereich zur Aufnahme der aus dem zweiten Bereich ausgestossenen Masse;
wobei zwischen dem zweiten Bereich und dem dritten Bereich eine Umformeinheit angeordnet ist, mit welcher die druckbeaufschlagte Masse vor ihrem Ausstoss in den dritten Bereich zu einer bestimmten Form umformbar ist.

Erfindungsgemäss weist die Anlage zwischen dem ersten Bereich und dem zweiten Bereich eine die Förderung der Masse hemmende einstellbare Barriere auf, und dem dritten Bereich ist eine Messvorrichtung zugeordnet ist, mit der ein Produktparameter bestimmbar ist, der zu der Schüttdichte und/oder Dichte des in dem dritten Bereich gebildeten schüttgutartigen fertigen Nahrungs- oder Futtermittels oder technischen Zwischenproduktes in Beziehung steht. Erfindungsgemäss ist die Messvorrichtung über eine Datenübertragungsstrecke mit einer Barriere-Ansteuerungsvorrichtung verbunden, um die einstellbare Barriere in Abhängigkeit von dem durch die Messvorrichtung bestimmbaren Produktparameter einzustellen.

Diese einstellbare Barriere zwischen dem ersten Bereich und dem zweiten Bereich ermöglichst es, den Füllgrad und somit die SME im ersten Bereich unabhängig von allen übrigen Prozessgrössen zu beeinflussen. Es ist sogar eine Online-Überwachung sowie ggf. Beeinflussung des Füllgrads und der SME während des Verfahrens möglich.

Man gewinnt somit gegenüber den bekannten herkömmlichen Verfahren und Anlagen zusätzliche Freiheit bei der Einstellung oder Steuerung des Verfahrens, um eine gleichbleibend hohe Produktqualität zu sichern.

Vorzugsweise weist die Datenübertragungsstrecke eine Datenverarbeitungseinheit auf, um die von der Messvorrichtung empfangenen Produktparameter-Daten zu Steuerungsdaten für die Barriere-Ansteuerungsvorrichtung zu verarbeiten. Besonders vorteilhaft ist es, wenn die Datenverarbeitungseinheit programmierbar ist, so dass sie an verschiedene Messvorrichtungen und Ansteuerungsvorrichtungen anpassbar ist.

Die Messvorrichtung enthält vorzugsweise einen Probennehmer zum Entnehmen eines vorbestimmten Schüttgut-Probevolumens und zum Einfüllen des Schüttgut-Probevolumens in eine Messzelle. Dadurch können in zeitlich konstanten Abständen Proben aus dem in dem dritten Bereich gebildeten Schüttgutstrom entnommen werden, so dass eine quasi-kontinuierliche Untersuchung der Proben und somit eine Produktüberwachung und ggf. Korrektur der Verfahrensbedingungen, insbesondere des SME, durchgeführt werden kann.

Vorzugsweise weist die Messvorrichtung eine Waage zum Bestimmen der Masse des Schüttgut-Probevolumens auf. Damit lässt sich die Schüttdichte des Produktes definitionsgemäss bestimmen.

Die Messvorrichtung kann auch eine Quelle und einen Empfänger für elektromagnetische (EM) Strahlung aufweisen, zwischen denen eine die Messzelle durchquerende EM-Strahlungsstrecke besteht. Die Abschwächung von eingestrahlter EM-Strahlung vorgegebener Intensität und die Änderung ihrer Ausbreitungsgeschwindigkeit beim Durchtritt durch das Schüttgut-Probenvolumen können ebenfalls zur indirekten Bestimmung des Schüttgewichts herangezogen werden.

Bei einer weiteren vorteilhaften Ausführung ist das Schüttgut des Schüttgut-Probevolumens in der Messzelle der Messvorrichtung fixierbar, und die Messvorrichtung weist eine die Messzelle durchquerenden Fluidstrecke zwischen einem Fluideinlass und einem Fluidauslass auf. Misst man den Druckabfall des Fluids und den Durchsatz des Fluids beim Durchtritt durch das Schüttgut-Probevolumen in der Messzelle, so erhält man dessen Fluidwiderstand, insbesondere dessen pneumatischen Widerstand, der ebenfalls zur indirekten Bestimmung des Schüttgewichts herangezogen werden kann. Bei einer an deren vorteilhaften Ausführung weist die Messvorrichtung eine Schallquelle und einen Schallempfänger auf, zwischen denen eine die Messzelle durchquerende Schallstrecke besteht. Ähnlich wie bei den EM-Wellen können die Abschwächung eingestrahlter Schallwellen vorgegebener Intensität und die Änderung ihrer Ausbreitungsgeschwindigkeit beim Durchtritt durch das Schüttgut-Probenvolumen zur indirekten Bestimmung des Schüttgewichts herangezogen werden.

Bei einer besonders vorteilhaften und eine praktisch kontinuierliche Überwachung des Schüttgewichts ermöglichenden Ausführung weist die Messvorrichtung eine in oder nach dem dritten Bereich angeordnete Prallfläche auf, die in den im dritten Bereich gebildeten Schüttgutstrom ragt. Ausserdem weist sie einen Schallempfänger zur Aufnahme des Schallspektrums des Prallgeräusches auf, und die Datenverarbeitungseinheit enthält einen Spektrumsanalysator zum Analysieren des aufgenommenen Schallspektrums. Das Schall-Spektrum des Prallgeräusches ist kennzeichnend für das Schüttgewicht ("Schall-Fingerabdruck") und kann zu dessen Überwachung herangezogen werden.

Bei einer weiteren besonders vorteilhaften und eine quasi-kontinuierliche Überwachung des Schüttgewichts ermöglichenden Ausführung enthält die Messvorrichtung eine Vereinzelungsvorrichtung zum Vereinzeln der Schüttgutteilchen des im dritten Bereich gebildeten Schüttgutstromes sowie ein optisches Abbildungssystem zum Erfassen einer Projektionsfläche der jeweiligen einzelnen Schüttgutteilchen. In diesem Fall stellt die Datenverarbeitungseinheit einen Spektrumsanalysator zum Analysieren des aufgenommenen Projektionsflächen-Spektrums dar.

Vorzugsweise enthält die Datenverarbeitungseinheit einen Speicher zum Abspeichern eines Sollwerts des jeweiligen Produktparameters, der einer Soll-Schüttdichte des Schüttgutes entspricht, sowie einen Komparator zum Vergleichen eines durch die Messvorrichtung erfassten Istwerts des jeweiligen Produktparameters des Schüttgutes mit dessen Sollwert.

Vorzugsweise werden die oben genannten Produktparameter-Messverfahren an den Schüttgutproben in der Messzelle in Kombination durchgeführt, wodurch sich die Korrelation zwischen den in der Messvorrichtung bestimmten Produktparametern und dem zu überwachenden Schüttgewicht des Produktes deutlich verbessern lässt.

Bei der einstellbaren Barriere handelt es sich vorzugsweise um eine einstellbare Querschnittsverengung.

In dem dritten Bereich kann ein Druck herrschen, der kleiner oder grösser als der Sättigungsdampfdruck des in der Masse enthaltenen Wassers ist. Dadurch lassen sich die eingangs beschriebenen Produkte in expandierter bzw. nicht-expandierter Form herstellen.

Gemäss einer bevorzugten Ausführung sind der erste Bereich und der zweite Bereich durch den Prozessraum eines Mehrwellen-Extruders, insbesondere eines gleichläufigen Zweiwellen-Extruders gebildet. Diese Ausführung zeichnet sich durch die Kompaktheit der Anlage aus.

Gemäss einer weiteren bevorzugten Ausführung sind der erste Bereich durch den Prozessraum eines Mehrwellen-Extruders, insbesondere eines gegenläufigen Zweiwellenextruders, gebildet und der zweite Bereich durch den Prozessraum eines Einwellen-Extruders, eines gegenläufigen Zweiwellen-Extruders oder einer Zahnradpumpe gebildet. Diese Ausführung ermöglicht einerseits eine starke Schereinwirkung und somit einen hohen SME-Eintrag in das Produkt im ersten Bereich und andererseits eine starke Pumpwirkung und somit einen starken Druckaufbau im Produkt im zweiten Bereich.

Zweckmässigerweise ist dem Mehrwellen-Extruder ein Vorkonditionierer vorgeschaltet. Der Vorkonditionierer und der Mehrwellen-Extruder bilden dann zusammen den ersten Bereich der erfindungsgemässen Anlage. Der Vorkonditionierer besitzt vorzugsweise zwei in Serie geschaltete Kammern. In der ersten Kammer findet dabei während einer relativ kurzen Verweilzeit des Produktes eine Benetzung der Ausgangsmaterialien statt, während in der zweiten Kammer das Wasser während einer relativ langen Verweilzeit auf die Ausgangsmaterialien einwirken kann.

Vorzugsweise ist die einstellbare Barriere innerhalb eines Längenabschnitts des Mehrwellen-Extruders bzw. des Zweiwellen-Extruders an einem Ort angeordnet, der sich zwischen 1/5 und 4/5, insbesondere zwischen 2/5 und 3/5, der Gesamtlänge des Mehrwellen-Extruders bzw. des Zweiwellen-Extruders befindet. Dadurch wird gewährleistet, dass förderaufseitig von der einstellbaren Barriere ausreichend viel Prozessraum für den durch die Barriere einstellbaren SME-Eintrag in das Produkt vorhanden ist und förderabseitig von der einstellbaren Barriere ausreichend viel Prozessraum für den Druckaufbau in dem Produkt vorhanden ist.

Die einstellbare Barriere kann auch am förderabseitigen Ende des durch den Mehrwellen-Extruder bzw. den Zweiwellen-Extruder gebildeten ersten Bereichs angeordnet sein, oder sie kann am förderaufseitigen Ende des durch den Einwellen-Extruder, den gegenläufigen Zweiwellen-Extruder oder die Zahnradpumpe gebildeten zweiten Bereichs angeordnet sein. Somit besitzt man förderaufseitig von der Barriere die Möglichkeit, die SME auf einem relativ hohen Niveau einzustellen und ggf. zu steuern, während man förderabseitig von der Barriere eine starke Pumpwirkung hat, die einen Druckaufbau über einen grossen Druckbereich ermöglicht.

Bei einer weiteren bevorzugten Ausführung ist die einstellbare Barriere durch einen jeweiligen schneckenfreien, rotationssymmetrischen Abschnitt der Schneckenwelle bzw. Schneckenwellen des Extruders und durch mindestens ein relativ zu dem jeweiligen rotationssymmetrischen Abschnitt bewegbares Sperrglied mit einer zu dem jeweiligen rotationssymmetrischen Abschnitt komplementären Aussparung gebildet ist, so dass ein Spalt mit einstellbarer Spaltbreite zwischen dem jeweiligen rotationssymmetrischen Abschnitt und der komplementären Aussparung des Sperrglieds vorliegt. Durch die Bewegung des Sperrglieds relativ zu dem ihm zugeordneten rotationssymmetrischen Abschnitt lässt sich die Sperrwirkung der Barriere im Extruder von ausserhalb des Extruders leicht einstellen.

Bei einer besonders vorteilhaften Ausführung weist die erfindungsgemässe Anlage in dem zweiten Bereich ein Druckeinstellungsmittel zur Einstellung des in der Masse herrschenden Druckes auf. Das Druckeinstellungsmittel kann eine Einrichtung zum Verändern der Menge des in der Masse vorliegenden Wassers, insbesondere eine Einrichtung zum wahlweisen Zuführen oder Abführen von Wasserdampf in bzw. aus dem zweiten Bereich aufweisen. Dadurch lässt sich der Druck im Produkt einstellen. Dies ist besonders wichtig, wenn man expandierte Extrudate herstellen möchte, deren Schüttgewicht durch den Gehalt an Wasserdampf und den Druck im Produkt bestimmt wird.

Durch diese Hintereinanderschaltung der einstellbaren Barriere (SME-Steuerungsmodul) und des Druckeinstellungsmittels (Dichte-Steuerungsmodul) wird eine unabhängige Beeinflussung des Kochgrades aufgrund der Produktbearbeitung (SME) einerseits und der Dichte bzw. des Schüttgewichts der Produkte andererseits ermöglicht. Beide Module können z.B. innerhalb eines einzigen Extruders (gleichläufiger Zwelwellen-Extruder) oder auf zwei verschiedene Extruder verteilt (SME-Steuerungsmodul am Ende eines gleichläufigen Zweiwellen-Extruders und Dichte-Steuerungsmodul am Anfang eines gegenläufigen Zweiwellen-Extruders, eines Einwellen-Extruders oder einer Zahnradpumpe) angeordnet sein.

Vorzugsweise weist das Druckeinstellungsmittel eine Zufuhrleitung und eine Abfuhrleitung zum Zuführen oder Abführen von Wasserdampf in bzw. aus dem zweiten Bereich auf, wobei die Zufuhrleitung und die Abfuhrleitung wahlweise freigegeben oder gesperrt werden können. Durch gezieltes Sperren oder Freigeben der jeweiligen Leitungen kann somit das Schüttgewicht expandierter Extrudate eingestellt werden oder verhindert werden, dass eine Expansion der Extrudate stattfindet.

Bei einer besonders bevorzugten Ausführung umfasst das Druckeinstellungsmittel eine Zufuhrleitung, die den zweiten Bereich mit einem Wasserdampf-Erzeugungssystem verbindet, eine erste Abfuhrleitung, die den zweiten Bereich mit einem Vakuumsystem verbindet, und eine zweite Abfuhrleitung, die den zweiten Bereich mit dem ersten Bereich verbindet, wobei die Zufuhrleitung sowie die erste und die zweite Abfuhrleitung wahlweise freigegeben oder gesperrt werden können. Die Verbindung des zweiten Bereichs mit dem ersten Bereichs ermöglicht z.B. eine Rückführung des aus dem zweiten Bereich zur Druckeinstellung abgezogenen Wasserdampfs in den ersten Bereich, insbesondere in den Vorkonditionierer. Dadurch wird einerseits Energie eingespart und andererseits der Ausstoss geruchsintensiven Dampfes in die Umgebungsluft weitgehend vermieden.

Bei einer weiteren besonders vorteilhaften Ausführung enthält die Messvorrichtung einen Drucksensor in dem dritten Bereich, wobei an den dritten Bereich ein Druckeinstellungsmittel angeschlossen ist, mit dem der Druck in dem dritten Bereich eingestellt werden kann. Dies ermöglicht eine weitere Beeinflussung des Expansionsverhaltens des Produktes im dritten Bereich.

In diesem Fall ist die Messvorrichtung über eine Datenübertragungsstrecke mit einer Druckeinstellungsmittel-Ansteuerungsvorrichtung verbunden, um das Druckeinstellungsmittel in Abhängigkeit von dem durch die Messvorrichtung bestimmbaren Druck oder einem der oben genannten Produktparameter im dritten Bereich einzustellen.

Die Datenübertragungsstrecke enthält dabei eine Datenverarbeitungseinheit, um die von der Messvorrichtung empfangenen Produktparameter-Daten oder Druckwerte aus dem dritten Bereich zu Steuerungsdaten für die Druckeinstellungsmittel-Ansteuerungsvorrichtung zu verarbeiten.

Die Umformeinheit ist zweckmässigerweise eine Düsenplatte mit einem rotierbaren Schneidmesser. Dadurch lassen sich die eingangs beschriebenen Produkte in Form von Pellets herstellen, deren Schüttgewicht einstellbar ist, indem beim Austritt des Produktes aus der Düsenplatte entweder gar nicht oder mehr oder weniger stark expandiert wird.

Das erfindungsgemässe Verfahren weist die folgenden aufeinanderfolgenden Schritte in aufeinanderfolgenden Bereichen auf:
a) Fördern der Masse durch einen ersten Bereich hindurch, welcher einen ersten Prozessraum aufweist, wobei die Masse unter Eintragung mechanischer und/oder thermischer Energie durchmischt und geknetet wird und das Wasser auf die Masse einwirkt;
b) Fördern der Masse durch einen zweiten Bereich hindurch, welcher einen zweiten Prozessraum aufweist, wobei in der Masse Druck aufgebaut wird;
c) Umformen der druckbeaufschlagten Masse mittels einer zwischen dem zweiten Bereich und einem dritten Bereich angeordneten Umformeinheit;
d) Ausstossen der druckbeaufschlagten und geformten Masse in den dritten Bereich;
   Erfindungsgemäss erfolgt die Einstellung des in dem ersten Bereich stattfindenden spezifischen mechanischen Energieeintrags in die Masse durch Einstellen einer die Förderung der Masse zwischen dem ersten Bereich und dem zweiten Bereich hemmenden Barriere, und in dem dritten Bereich mittels einer Messvorrichtung, die einen Produktparameter bestimmt, der zu der Schüttdichte und/oder Dichte des fertigen Nahrungs- oder Futtermittels oder technischen Zwischenproduktes in Beziehung steht. Erfindungsgemäss erfolgt das Einstellen der Barriere in Abhängigkeit von dem in der Messvorrichtung bestimmten Produktparameter, wobei vorzugsweise der in der Messvorrichtung bestimmte Istwert des Produktparameters mit einem vorbestimmten Sollwert des Produktparameters verglichen wird und das Einstellen der Barriere in Abhängigkeit von der Istwert/Sollwert-Abweichung des Produktparameters erfolgt.

Vorzugsweise wird während der Produktion des schüttgutartigen Nahrungs- oder Futtermittels wiederholt ein Schüttgut-Probevolumen aus dem Schüttgutstrom in dem dritten Bereich entnommen. Anhand dieses Schüttgut-Probevolumens, das vorzugsweise in einer Messzelle gehalten wird, kann mindestens eine der folgenden Messgrössen als Produktparameter bestimmt und verwendet werden: Masse des Schüttgut-Probevolumens; Abschwächung elektromagnetischer Strahlung, insbesondere von Gamma-Strahlung, beim Durchtritt durch das Schüttgut-Probevolumen; Ausbreitungsgeschwindigkeit elektromagnetischer Strahlung, insbesondere von Mikrowellenstrahlung, beim Durchtritt durch das Schüttgut-Probevolumen; Druckabfall eines Fluids, insbesondere von Druckluft, beim Durchtritt durch das fixierte Schüttgut-Probevolumen; Abschwächung mechanischer Wellen, insbesondere von Schallwellen, beim Durchtritt durch das Schüttgut-Probevolumen.

Als Produktparameter kann auch das Schall-Spektrum des Prallgeräusches erfasst werden, das der Schüttgutstrom in oder nach dem dritten Bereich erzeugt, wenn er auf eine Prallfläche auftrifft bzw. umgelenkt wird. Hierzu können auch Schallspektren des Schüttgutstromes bei dessen Ablenkung in einer Rohrkrümmung eines pneumatischen Schüttgut-Fördersystems verwendet werden.

Zur Erfassung eines weiteren Produktparameters werden die Teilchen des Schüttgutstromes aus dem dritten Bereich vereinzelt, wobei jedes Schüttgutteilchen optisch separat erfasst wird und als Produktparameter dann das Projektionsflächen-Spektrum der Schüttgutteilchen verwendet wird.

Wie schon erwähnt, kann auch der Druck in dem dritten Bereich gemessen werden. Er lässt sich besonders leicht mit dem Schüttgewicht bzw. mit der Pellet-Dichte eines expandierten Produktes korrelieren.

Zweckmässigerweise erfolgt in dem zweiten Bereich eine Einstellung des in der Masse herrschenden Druckes, wobei die Einstellung des Druckes vorzugsweise durch Zuführen oder Abführen von Wasserdampf in dem zweiten Bereich erfolgt, um den Wassergehalt bzw. die Produktfeuchte der Masse zu verändern.

Besonders vorteilhaft ist es, wenn man wahlweise dem zweiten Bereich Wasserdampf von einem Wasserdampf-Erzeugungssystem zuführt oder dem zweiten Bereich Wasserdampf zu einem Vakuumsystem entzieht oder aus dem zweiten Bereich Wasserdampf in den ersten Bereich zurückführt.

Weitere Vorteile, Merkmale und Anwendungsmöglichkeiten der Erfindung ergeben sich aus der nun folgenden Beschreibung nicht einschränkend aufzufassenden Ausführungsbeispiele anhand der Zeichnung, wobei
- Fig. 1: eine rein schematische Darstellung der erfindungsgemässen Anlage und des erfindungsgemässen Verfahrens zeigt;
- Fig. 2: eine schematische, teilweise aufgeschnittene Ansicht eines ersten Ausfüh- rungsbeispiels der erfindungsgemässen Anlage zeigt;
- Fig. 3: eine schematische, teilweise aufgeschnittene Ansicht eines zweiten Aus- führungsbeispiels der erfindungsgemässen Anlage zeigt;
- Fig. 4: eine schematische, teilweise aufgeschnittene Ansicht eines dritten Ausfüh- rungsbeispiels der erfindungsgemässen Anlage zeigt;
- Fig. 5: eine schematische, teilweise aufgeschnittene Seitenansicht einer ersten Ausführung der erfindungsgemässen einstellbaren Barriere zeigt; und
- Fig. 6A, 6B, 6C, 6D: schematische Perspektivansichten einer zweiten Ausführung der erfin- dungsgemässen einstellbaren Barriere in verschiedenen Betriebsstellun- gen sind.

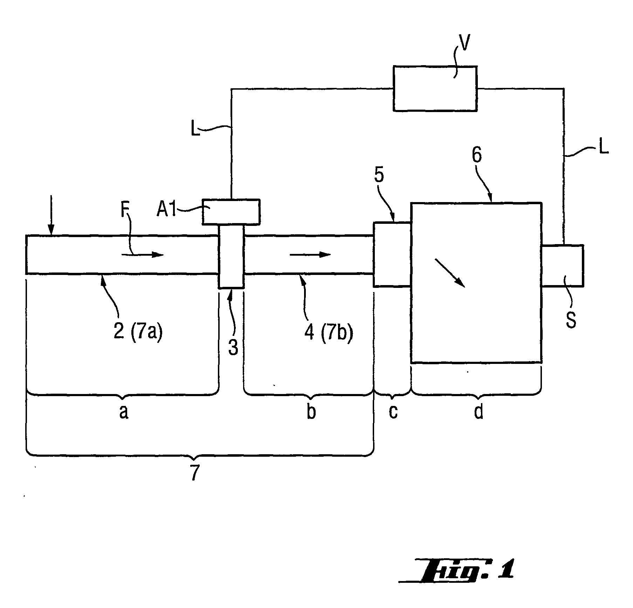

Fig. 1 zeigt eine rein schematische Darstellung der erfindungsgemässen Anlage sowie des erfindungsgemässen Verfahrens. Die Pfeile F stellen den Produktfluss der Masse durch die Anlage dar.

Die Anlage weist entlang des Produktflusses folgende Bereiche auf:
➢ einen ersten Bereich 2, in welchem eine Durchmischung der Masse erfolgt und in die Masse mechanische und/oder thermische Energie eingetragen wird (Schritt a);
➢ einen zweiten Bereich 4, in welchem ein Druckaufbau in der Masse erfolgt (Schritt b);
➢ einen dritten Bereich 6 zur Aufnahme der aus dem zweiten Bereich 4 ausgestossenen Masse (Schritt d).

Zwischen dem zweiten Bereich 4 und dem dritten Bereich 6 befindet sich eine Umformeinheit 5, mit welcher die druckbeaufschlagte Masse vor ihrem Ausstoss in den dritten Bereich 6 zu einer bestimmten Form umgeformt wird (Schritt c).

Ausserdem besitzt die Anlage zwischen dem ersten Bereich 2 und dem zweiten Bereich 4 eine die Förderung der Masse hemmende einstellbare Barriere 3 sowie eine Produktparameter-Messvorrichtung S, eine Datenübertragungsstrecke L, eine Messdaten-Verarbeitungsvorrichtung V und eine Barriere-Ansteuerungsvorrichtung A1. Die Messvorrichtung S dient zur Messung eines Produktparameters an dem in den dritten Bereich 6 austretenden Produkt. Hierzu wird durch einen (nicht dargestellten) Probennehmer aus dem Schüttgutstrom im dritten Bereich 6 eine Schüttgutprobe entnommen und in eine Messkammer bzw. Messzelle überführt. Als Messzelle kann auch der vorzugsweise becherförmige Probennehmer dienen.

Der in der Messzelle bestimmte Produktparameter kann irgendein Produktparameter sein, der zu der Schüttdichte bzw. der (Pellet-)Dichte des Produktes in Beziehung steht. Folgende Parameter können z.B. gemessen werden:
➢ Masse des Schüttgut-Probevolumens
➢ Abschwächung elektromagnetischer Strahlung, insbesondere von GammaStrahlung, beim Durchtritt durch das Schüttgut-Probevolumen
➢ Ausbreitungsgeschwindigkeit elektromagnetischer Strahlung, insbesondere von Mikrowellenstrahlung, beim Durchtritt durch das Schüttgut-Probevolumen
➢ Druckabfall eines Fluids, insbesondere von Druckluft, beim Durchtritt durch das fixierte Schüttgut-Probevolumen
➢ Abschwächung mechanischer Wellen, insbesondere von Schallwellen, beim Durchtritt durch das Schüttgut-Probevolumen.

Die in der Messvorrichtung S gewonnenen Messdaten für den jeweiligen Produktparameter werden über die Datenübertragungsstrecke L der Messdaten-Verarbeitungsvorrichtung V zugeführt. Dort werden sie zu Ansteuerungsdaten für die Barriere-Ansteuerungsvorrichtung A1 verarbeitet, die dann über die Datenübertragungsstrecke L der Barriere-Ansteuerungsvorrichtung A1 zugeführt werden, um die Barriere 3 entsprechend einzustellen. Dadurch wird der jeweilige erfasste Produktparameter beeinflusst. Auf diese Weise lässt sich der jeweilige Produktparameter regeln und überwachen.

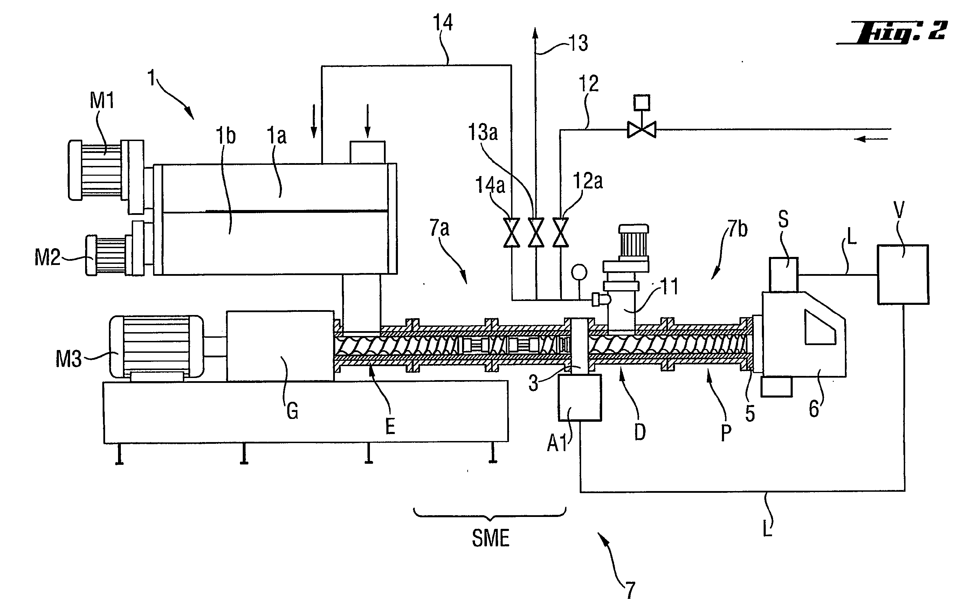

Die eingeklammerten Bezugsziffern der Fig. 1 weisen auf die entsprechenden Bezugsziffern in Fig. 2, Fig. 3 und Fig. 4 hin.

Fig. 2 zeigt eine schematische, teilweise aufgeschnittene Ansicht eines ersten Ausführungsbeispiels der erfindungsgemässen Anlage.

Die Anlage weist entlang des Produktflusses die folgenden Abschnitte auf:
➢ einen Vorkonditionierer 1 mit einer ersten Kammer 1 a und einer zweiten Kammer 1 b, in denen (nicht gezeigte) Werkzeuge von den Motoren M1 bzw. M2 angetrieben werden, wobei die erste und die zweite Kammer in Serie zueinander geschaltet sind;
➢ einen gleichläufigen Zweiwellen-Extruder 7 mit einem ersten Teil-Prozessraum 7a und einem zweiten Teil-Prozessraum 7b, zwischen denen eine einstellbare Barriere 3 angeordnet ist;
➢ am förderabseitigen Ende des Extruders 7 eine Umformeinheit 5, z.B. in Form einer Düsenplatte und einem rotierenden Schneidmesser; und
➢ schliesslich einen dritter Bereich 6, in dem das fertig geformte Produkt, z.B. in Form eines Schüttgutstromes aus ausgestossenen Schüttgutteilchen, aufgenommen wird.

Der durch einen Motor M3 über ein Getriebe G angetriebene Zweiwellen-Extruder 7 weist entlang der Produktförderrichtung einen Einzugsbereich E, einen Kochbereich SME (SME-Eintragungsbereich), die einstellbare Barriere 3, einen Dichte-Einstellbereich D sowie einen Druck-Aufbaubereich P auf. Innerhalb des Dichte-Einstellbereichs D befindet sich ein Druckeinstellungsmittel 11.

Das Druckeinstellungsmittel 11 ist einerseits mit dem Dichte-Einstellbereich D des Extruders 7 und andererseits mit einer Zufuhrleitung 12, einer ersten Abfuhrleitung 13 und einer zweiten Abfuhrleitung 14 verbunden. Das Druckeinstellungsmittel kann ein Rückhaltewerk (in den Extruder zurückfördernde Schnecken) aufweisen, um zu verhindern, dass zusammen mit abgezogenem Dampf auch Produkt aus dem Extruder 7 austritt. Durch ein Ventil 12a in der Zufuhrleitung 12, ein Ventil 13a in der ersten Abfuhrleitung 13 und ein Ventil 14a in der zweiten Abfuhrleitung 14 kann dem zweiten Teil-Prozessraum 7b des Extruders wahlweise Wasserdampf zugeführt oder entzogen werden, wobei vorzugsweise der entzogene Wasserdampf über die Abfuhrleitung 14 in den Vorkonditionierer 1 rückgeführt wird.

Dem Druckeinstellungsmittel 11 sind zugeordnet, bzw. es sind mit ihm verbunden:
➢ eine Zufuhrleitung 12, die den zweiten Teil-Prozessraum 7b mit einem (nicht-gezeigten) Wasserdampf-Erzeugungssystem verbindet;
➢ eine erste Abfuhrleitung 13, die den zweiten Teil-Prozessraum 7b mit einem (nicht-gezeigten) Vakuumsystem verbindet; und
➢ eine zweite Abfuhrleitung 14, die den zweiten Teil-Prozessraum 7b mit dem Vorkonditionierer 1 verbindet,
wobei die Zufuhrleitung 12 sowie die erste und die zweite Abfuhrleitung 13, 14 über die jeweiligen Ventile 12a, 13a und 14a wahlweise freigegeben oder gesperrt werden können.

Das Ausgangsmaterial (Rohmaterialien) zur Herstellung des stärke-, fett- oder proteinbasierten Nahrungs- oder Futtermittels weist stärke-, fett- oder proteinhaltige Rohmaterialien sowie Wasser auf. Diese werden dem ersten Bereich 2 (siehe Fig. 1) entweder allesamt schon im Vorkonditionierer 1 zugeführt oder nach und nach im Vorkonditionierer und im ersten Teil-Prozessraum 7a des Extruders 7 zugeführt.

Im Vorkonditionierer 1 wird nur relativ wenig SME eingetragen, und das Produkt wird in ihm noch nicht gekocht. Erst im ersten Teil-Prozessraum 7a des Extruders 7 findet der wesentliche SME-Eintrag und der eigentliche Kochvorgang statt.

Die in Fig. 2 gezeigte Anlage ermöglicht einerseits eine Einstellung des SME-Eintrags im Extruder 7 durch Einstellen des Füllgrads im ersten Teil-Prozessraum 7a des Extruders 7 mittels der einstellbaren Barriere 3 und andererseits eine Einstellung der Dichte bzw. des Schüttgewichts des Produktes durch Einstellen des Wassergehalts im Produkt im zweiten Teil-Prozessraum 7b des Extruders 7 mittels des Druckeinstellungsmittels 11.

Die erfindungsgemässe Anordnung der einstellbaren Barriere 3 zwischen dem ersten Teil-Prozessraum 7a und dem zweiten Teil-Prozessraum 7b des Extruders 7 ermöglicht gegenüber herkömmlichen Anlagen eine Entkoppelung der Einstellung des SME-Eintrags und der Einstellung des Schüttgewichts, d.h. SME-Eintrag und Schüttgewicht (Produktdichte) lassen sich unabhängig voneinander einstellen.

Ähnlich wie in Fig. 1 besitzt dieses erste Ausführungsbeispiel der erfindungsgemässen Anlage eine Produktparameter-Messvorrichtung S, eine Datenübertragungsstrecke L, eine Messdaten-Verarbeitungsvorrichtung V und eine Barriere-Ansteuerungsvorrichtung A1.

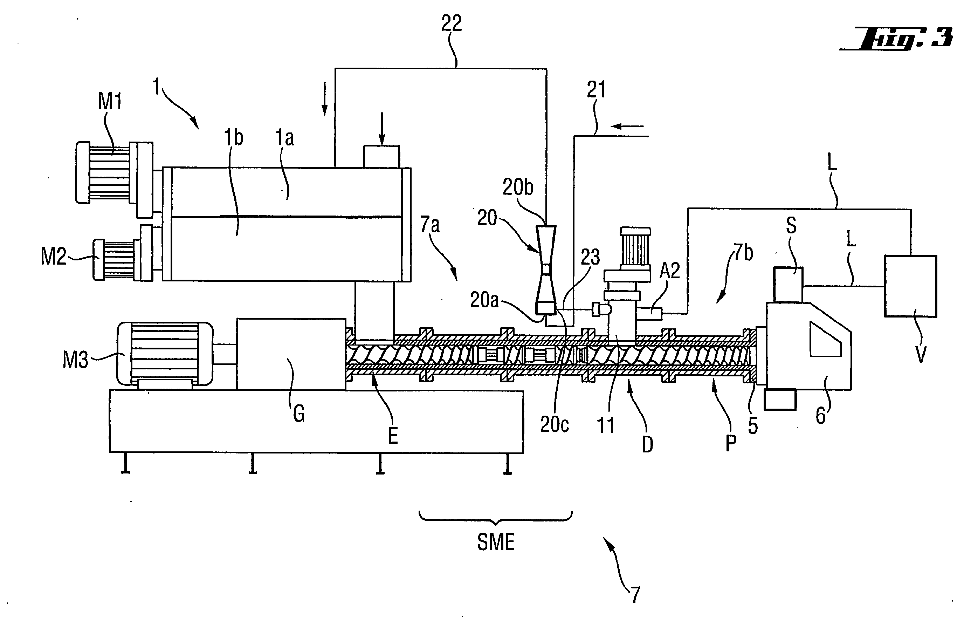

Zusätzlich kann bei diesem ersten Ausführungsbeispiel (ähnlich wie im zweiten Ausführungsbeispiel der Fig. 3) mit der Messdaten-Verarbeitungsvorrichtung S auch noch eine Druckeinstellungsmittel-Ansteuerungsvorrichtung A2 über eine Datenübertragungsstrecke L verbunden sein. Dies ist vor allem dann vorteilhaft, wenn die Messvorrichtung S einen Drucksensor aufweist, der den Druck der Atmosphäre im dritten Bereich 6 erfasst.

Fig. 3 zeigt eine schematische, teilweise aufgeschnittene Ansicht eines zweiten Ausführungsbeispiels der erfindungsgemässen Anlage. Sämtliche Elemente, die mit den entsprechenden"Elementen der Fig. 2 identisch sind, tragen in Fig. 3 dieselben Bezugszeichen wie in Fig. 2.

Die Anlage der Fig. 3 unterscheidet sich von der Anlage der Fig. 2 dadurch, dass das Druckeinstellungsmittel 11 einer Dampfstrahlpumpe 20 zugeordnet ist, die einen Dampfstrahl-Einlass 20a, einen Dampfstrahl-Auslass 20b und einen Saug-Einlass 20c aufweist. Die Dampfstrahl-Pumpe 20 ermöglicht die Erzeugung eines Unterdrucks an ihrem Saug-Einlass 20c, wenn sie von einem Dampfstrahl von ihrem Einlass 20a zu ihrem Auslass 20b durchströmt wird. Im Grunde genommen bildet die Dampfstrahl-Pumpe 20 in diesem Ausführungsbeispiel das Druckeinstellungsmittel, da durch sie der an den Dichte-Einstellbereich D angelegte Unterdruck einstellbar ist.

Bei der Dampfstrahlpumpe 20 ist der Dampfstrahl-Einlass 20a mit einem (nicht gezeigten) Wasserdampf-Erzeugungssystem über eine erste Dampfleitung 21 verbunden, der

Dampfstrahl-Auslass 20b mit dem Vorkonditionierer 1 über eine zweite Dampfleitung 22 verbunden und der Saug-Einlass 20c mit dem zweiten Teil-Prozessraum 7b über eine dritte Dampfleitung 23 verbunden, wobei die erste, die zweite und die dritte Dampfleitung 21, 22, 23 jeweils ein (nicht-gezeigtes) erstes, zweites und drittes Ventil aufweisen, mit dem jede von ihnen wahlweise freigegeben oder blockiert werden kann.

Ausserdem ist eine die erste Dampfleitung 21 und die dritte Dampfleitung 23 verbindende vierte Dampfleitung (nicht-gezeigt) vorgesehen, die eine Überbrückungsleitung (Umgehungsleitung) um die Dampfstrahlpumpe 20 bildet, wobei die vierte Dampfleitung ein viertes Ventil (nicht-gezeigt) aufweist, mit dem sie wahlweise blockiert oder freigegeben werden kann.

Wenn die Überbrückungsleitung blockiert und die Dampfleitungen 21, 22 und 23 freigegeben sind, befindet sich die Dampfstrahlpumpe im Saugmodus und saugt aus dem Teil-Prozessraum 7b Wasserdampf ab. Dies führt bei der später stattfindenden Expansion in der Umformeinheit 5 zu einer Erhöhung der Produktdichte bzw. des Schüttgewichts.

Wenn hingegen die Überbrückungsleitung sowie die Dampfleitungen 21 und 23 freigegeben sind und die Dampfleitung 22 blockiert ist, befindet sich die Dampfstrahlpumpe im Druckmodus und drückt aus dem Wasserdampf-Erzeugungssystem über die Dampfleitung 21 herangeführten Wasserdampf in den Teil-Prozessraum 7b. Dies führt bei der später stattfindenden Expansion in der Umformeinheit 5 zu einer Verringerung der Produktdichte bzw. des Schüttgewichts.

Je nach gewünschtem Schüttgewicht kann die Dichte der expandierten Extrudate (Pellets) bzw. der Expansionsgrad an der Umformeinheit 5 (z.B. Düsenplatte) stufenlos und in einem grossen Bereich eingestellt werden.

Ähnlich wie in Fig. 1 besitzt die dieses zweite Ausführungsbeispiel der erfindungsgemässen Anlage eine Produktparameter-Messvorrichtung S, eine Datenübertragungsstrecke L, eine Messdaten-Verarbeitungsvorrichtung V und eine Druckeinstellungsmittel-Ansteuerungsvorrichtung A2.

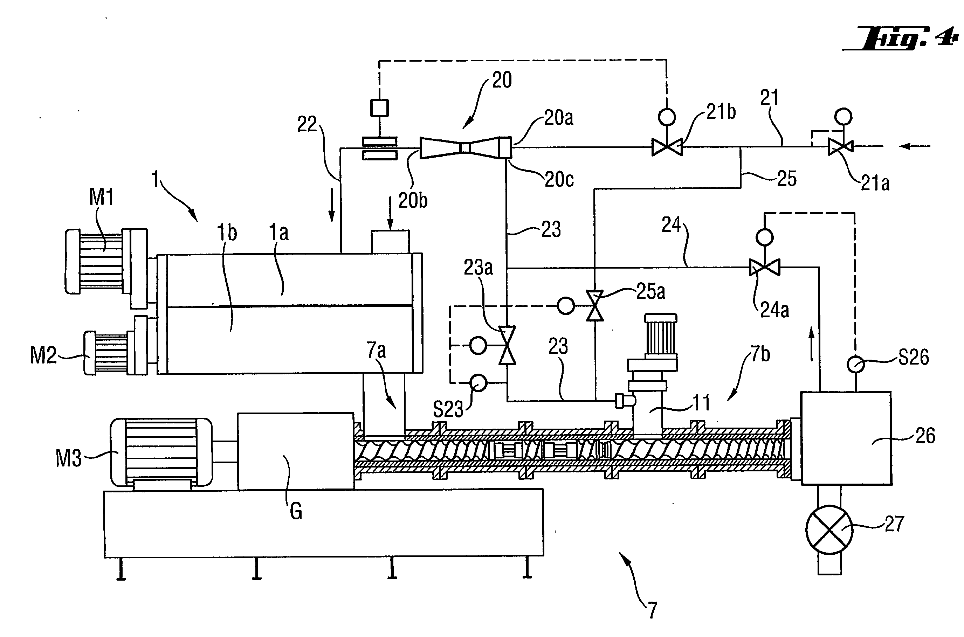

Fig. 4 zeigt eine schematische, teilweise aufgeschnittene Ansicht eines dritten Ausführungsbeispiels der erfindungsgemässen Anlage. Sämtliche Elemente, die mit den entsprechenden Elementen der Fig. 2 oder der Fig. 3 identisch sind, tragen in Fig. 4 dieselben Bezugszeichen wie in Fig. 2 oder in Fig. 3.

Die Anlage der Fig. 4 unterscheidet sich von der Anlage der Fig. 3 dadurch, dass der Saug-Einlass 20c der Dampfstrahlpumpe 20 sowohl mit dem zweiten Teilprozessraum 7b des Extruders (zweiter Bereich 4) als auch mit dem dritten Bereich 6 verbunden ist, der eine Schneidapparat-Kammer 26 ist, in der ein definierter Druck herrscht und in der sich eine Düsenplatte mit einem rotierenden Schneidmesser befindet. Das in der Kammer 26 erzeugte Schüttgut verlässt die Kammer 26 über ein Schleusenrad 27.

Der Dampfstrahl-Einlass 20a der Dampfstrahlpumpe 20 ist über eine erste Dampfleitung 21 mit einem (nicht gezeigten) Wasserdampf-Erzeugungssystem verbunden, während der Dampfstrahl-Auslass 20b der Dampfstrahlpumpe 20 über eine zweite Dampfleitung 22 mit dem Vorkonditionierer 1 verbunden ist. In der Dampfleitung 21 sind Ventile 21 a und 21 b enthalten, die bei Bedarf gesteuert werden können.

Die Dampfstrahl-Pumpe 20 ermöglicht die Erzeugung eines Unterdrucks an ihrem Saug-Einlass 20c. Dieser Unterdruck wird über eine dritte Dampfleitung 23 dem Teil-prozessraum 7b des Extruders (zweiter Bereich 4) zugeführt und über eine vierte Dampfleitung 24 dem dritten Bereich 6 bzw. der Schneidapparat-Kammer 26 zugeführt.

An der dritten Dampfleitung 23 ist ein Druck- oder Temperatursensor S23 angebracht, der ein Ventil 23a in der dritten Dampfleitung 23 ansteuert.

An der Schneidapparat-Kammer 26 ist ein Druck- oder Temperatursensor S26 angebracht, der ein Ventil 24a in der vierten Dampfleitung 24 ansteuert.

Über eine fünfte Dampfleitung 25 ist das (nicht gezeigte) Wasserdampf-Erzeugungssystem auch mit dem Teilprozessraum 7b des Extruders verbunden. Dadurch kann Dampf direkt in den Extruder 7 eingebracht werden (Direktdampf). Die fünfte Dampfleitung 25 enthält ein Ventil 25a, das ebenfalls von dem Sensor S23 angesteuert wird.

Durch das Zusammenspiel der Dampfleitungen 23, 24 und 25 mit den jeweiligen Ventilen 23a, 24a und 25a sowie deren Ansteuerung über die Sensoren S26 und S23 ist eine Regelung der Schüttdichte bzw. der Pellet-Dichte des hergestellten Schüttgutes möglich.

Die Ventile 23a und 25a könnten auch durch ein Drei-Wege-Ventil ersetzt werden.

Diese Anordnung ermöglicht die Erzeugung eines Unterdrucks im zweiten Bereich 4 (= Extruder-Teilbereich 7b) und/oder im dritten Bereich 6 (=Schneidapparat-Kammer 26) mittels der Dampfstrahlpumpe 20. Diese Dampfstrahlpumpe wird mit Prozessdampf aus dem (nicht gezeigten) Wasserdampf-Erzeugungssystem betrieben und erlaubt eine vollständige Rückführung der durch den SME erzeugten thermischen Energie des Extruders 7 und der Schneidapparat-Kammer 26.

Durch das Ziehen eines Vakuums über die dritte Dampfleitung 23 am Extruder 7 und/oder über die vierte Dampfleitung 24 an der Schneidapparat-Kammer 26 sowie durch die Direktdampfzuführung über die Dampfleitung 25 an den Extruder 7 kann das Schüttgewicht bzw. die Pellet-Dichte des im Schneidapparat 26 erzeugten Schüttgutes eingestellt werden. Die Sensoren S23 und S26 zusammen mit den durch sie angesteuerten Ventilen 23a und 25a bzw. 24a ermöglichen eine Variierung des Schüttgewichts in weiten Grenzen.

Mit diesem System gemäss dem dritten Ausführungsbeispiel lassen sich typischerweise die folgenden Bereiche einstellen:
➢ Schüttgewicht von 200 kg/m³ bis 650 kg/m³
➢ Druck im Extruder von 0,5 bar bis 10 bar
➢ Druck im Schneidapparat von 0,5 bar bis 2 bar.

Ähnlich wie in Fig. 1, Fig. 2 und Fig. 3 kann dieses dritte Ausführungsbeispiel der erfindungsgemässen Anlage zusätzlich eine einstellbare Barriere 3, eine Produktparameter-Messvorrichtung S, eine Datenübertragungsstrecke L, eine Messdaten-Verarbeitungsvorrichtung V sowie eine Barriere-Ansteuerungsvorrichtung A1 und/oder eine Druckeinstellungsmittel-Ansteuerungsvorrichtung A2 enthalten. Um die Übersichtlichkeit zu wahren, wurden diese Elemente S, L, V sowie A1 und/oder A2 in Fig. 4 nicht dargestellt.

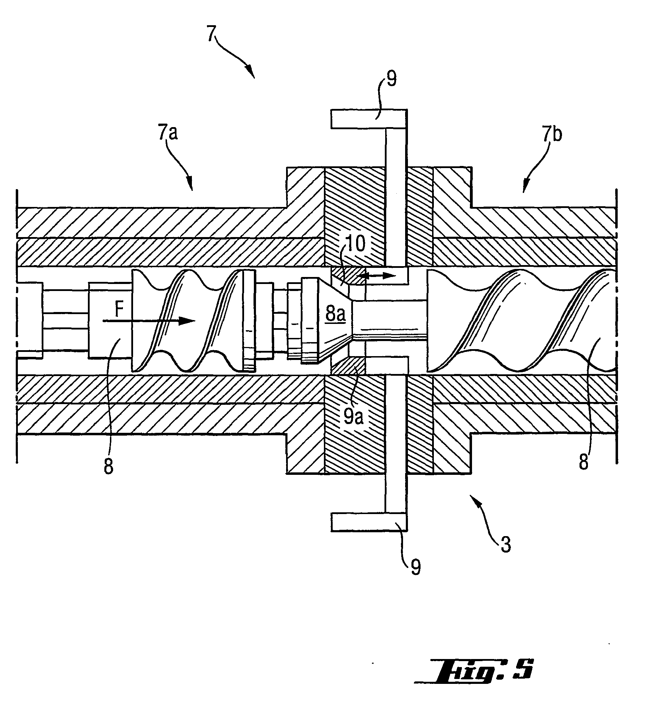

Fig. 5 zeigt eine schematische, teilweise aufgeschnittene Seitenansicht einer ersten Ausführung der erfindungsgemässen einstellbaren Barriere.

Die einstellbare Barriere 3 wird gebildet durch:
➢ einen jeweiligen schneckenfreien, rotationssymmetrischen Abschnitt 8a der Schneckenwelle bzw. Schneckenwellen 8 des Extruders 7; und
➢ mindestens ein relativ zu dem jeweiligen rotationssymmetrischen Abschnitt 8a bewegbares Sperrglied 9 mit einer zu dem jeweiligen rotationssymmetrischen Abschnitt 8a komplementären Aussparung 9a.

Somit liegt ein Spalt 10 mit einstellbarer Spaltbreite zwischen dem jeweiligen rotationssymmetrischen Abschnitt 8a und der komplementären Aussparung 9a des Sperrglieds 9 vor.

In dem in Fig. 5 gezeigten Beispiel sind der rotationssymmetrische Abschnitt 8a und die komplementäre Aussparung 9a kegelförmig ausgebildet.

Eine axiale Verschiebung des Sperrglieds 9 nach links bewirkt eine Verkleinerung des Spalts 10 und damit eine Erhöhung des Füllgrades im Teil-Prozessraum 7a, wodurch eine Erhöhung der eingetragenen SME erzielt wird.

Eine axiale Verschiebung des Sperrglieds 9 nach rechts bewirkt eine Vergrösserung des Spalts 10 und damit eine Absenkung des Füllgrades im Teil-Prozessraum 7a, wodurch eine Verringerung der eingetragenen SME erzielt wird.

Die durch die Veränderung des Spaltes 10 einstellbare Barriere 3 ermöglicht auf diese Weise eine Einstellung der in den ersten Teil-Prozessraum 7a eingetragenen SME unabhängig von allen übrigen Prozessgrössen und insbesondere unabhängig von der Einstellung der Produktdichte bzw. des Produkt-Schüttgewichts in dem zweiten Teil-Prozessraum 7b.

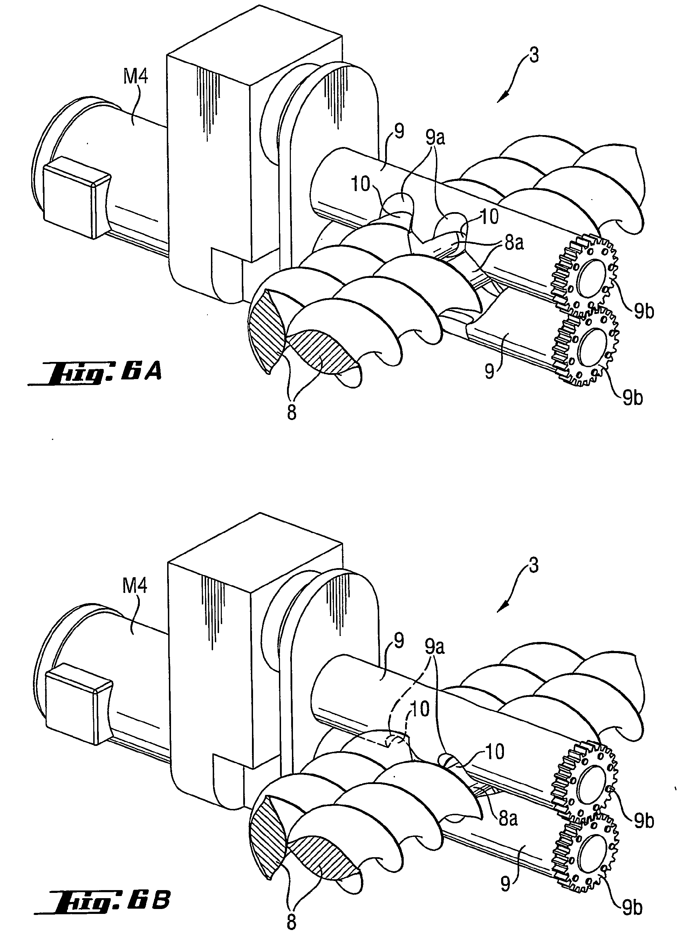

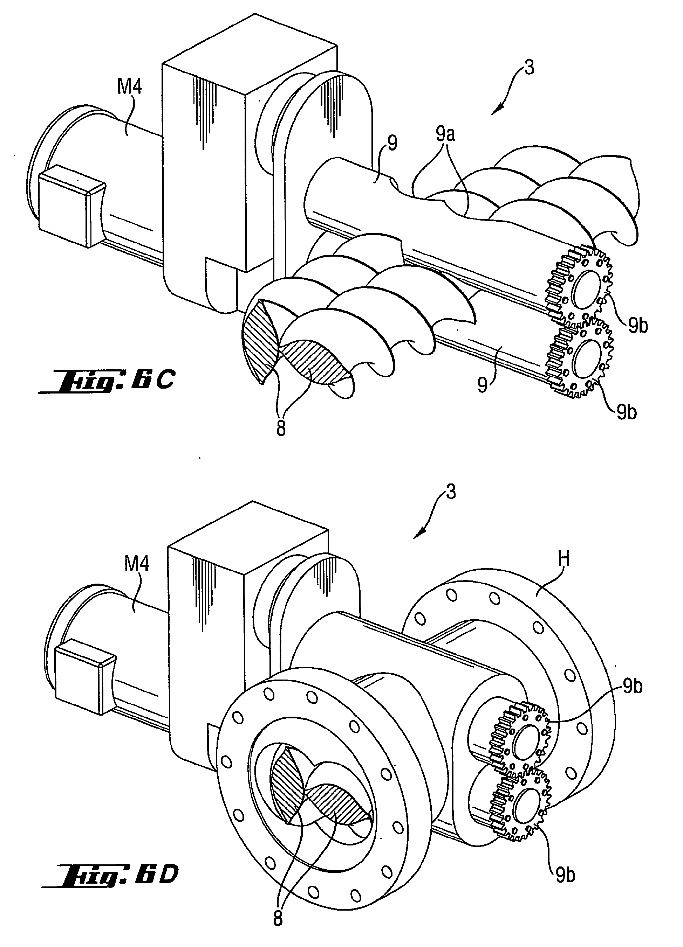

Fig. 6A, 6B, 6C und 6D zeigen schematische Perspektivansichten einer zweiten Ausführung der erfindungsgemässen einstellbaren Barriere in verschiedenen Betriebsstellungen.

Das hier abgebildete SME-Steuerungsmodul 3 besteht im wesentlichen aus zwei zylinderförmigen Sperrgliedern 9, die nebeneinanderliegend und mit parallel verlaufenden Zylinderachsen angeordnet sind. Jedes der beiden Sperrglieder 9 besitzt zwei Aussparungen 9a, die komplementär zu einem jeweiligen rotationssymmetrischen Abschnitt 8a zweier parallel angeordneter, miteinander kämmender Schneckenwellen 8 sind. Das untere der beiden zylinderförmigen Sperrglieder 9 wird über einen Sperrgliedmotor M4 angetrieben. An den motorabgewandten Enden besitzt jedes der beiden Sperrglieder 9 ein Zahnrad 9b. Der Radius der beiden Zahnräder (Stirnräder) und ihre Zähne sind so ausgebildet, dass sie miteinander kämmen. Dadurch wird das obere Sperrglied 9 über das untere durch den Motor M4 angetriebene Sperrglied 9 angetrieben. Dadurch bewegen sich die betätigten Sperrglieder 9, 9 gegenläufig, wodurch der Spalt 10 zwischen den rotationssymmetrischen Abschnitten 8a und den komplementären Aussparungen 9a je nach der Drehrichtung des Motors M4 verkleinert oder vergrössert werden kann.

In dem hier gezeigten Beispiel sind die rotationssymmetrischen Abschnitte 8a und die komplementären Aussparungen 9a zylinderförmig ausgebildet.

Fig. 6A zeigt das SME-Steuerungsmodul 3 in einer vollständig geöffneten Stellung. Die beiden Sperrglieder 9, 9 sind hier weitestmöglich voneinander weg gedreht. Diese Stellung ermöglicht es, die Schnecken 8 auszubauen.

Fig. 6B zeigt das SME-Steuerungsmodul 3 in einer um ca. 60° geschwenkten Stellung. Die beiden Sperrglieder 9, 9 sind hier teilweise einander zugedreht. Diese und andere Winkelstellungen der Sperrglieder 9, 9 ermöglichen die Einstellung eines gewünschten Strömungswiderstands in dem Modul 3 und somit des Füllgrads in dem ersten Teil-Prozessraum 7a (siehe Fig. 2).

Fig. 6C zeigt das SME-Steuerungsmodul 3 in einer um 90° geschwenkten Stellung. Die beiden Sperrglieder 9, 9 sind hier weitestmöglich aufeinander zu gedreht. Diese Winkelstellung der Sperrglieder 9, 9 ermöglicht eine fast vollständige Sperrung und somit eine Maximierung des Strömungswiderstands in dem Modul 3 und somit des Füllgrads in dem ersten Teil-Prozessraum 7a (siehe Fig. 2). In dieser Stellung beträgt der Spalt 10 zwischen den zylinderförmigen Abschnitten 8a der Schneckenwellen 8 und den komplementären Aussparungen 9a der Sperrglieder 9, 9 etwa 0,5mm.

Fig. 6D zeigt die komplette Einheit des SME-Steuerungsmoduls einschliesslich des in den Fig. 6A, 6B und 6C nicht gezeigten Sperrgliedgehäuses H.

### Bezugszeichen:

- 1: Vorkonditionierer
- 1a: erste Kammer
- 1 b: zweite Kammer
- 2: erster Bereich
- 3: einstellbare Barriere
- 4: zweiter Bereich
- 5: Umformeinheit, Düsenplatte
- 6: dritter Bereich
- S: Produktparameter- Messvorrichtung
- V: Messdaten- Verarbeitungsvorrichtung
- L: Daten-Übertragungsstrecke
- A1: Barriere- Ansteuerungsvorrichtung
- A2: Druckeinstellungsmittel- Ansteuerungsvorrichtung
- 7: gleichläufiger Mehrwellen- Extruder oder Zweiwellen- Extruder
- 7a: erster Teil-Prozessraum des MWE oder ZWE
- 7b: zweiter Teil-Prozessraum des MWE oder ZWE
- M1: erster Motor des Vorkonditionie- rers
- M2: zweiter Motor des Vorkonditio- nierers
- M3: Extrudermotor
- F: Produkt-Förderrichtung
- G: Extrudergetriebe
- E: Einzugsbereich
- SME: SME-Eintragungsbereich (Koch- bereich)
- D: Dichte-Einstellbereich
- P: Druck-Aufbaubereich
- 8: Schneckenwelle
- 8a: rotationssymmetrischer Ab- schnitt
- 9: Sperrglied
- 9a: komplementäre Aussparung
- 9b: Zahnrad
- M4: Sperrgliedmotor
- H: Sperrgliedgehäuse
- 10: Spalt
- 11: Druckeinstellungsmittel
- 12: Zufuhrleitung
- 12a: Ventil
- 13: erste Abfuhrleitung
- 13a: Ventil
- 14: zweite Abfuhrleitung
- 14a: Ventil
- 20: Druckeinstellungsmittel, Dampf- strahlpumpe
- 20a: Dampfstrahl-Einlass
- 20b: Dampfstrahl-Auslass
- 20c: Saug-Einlass
- 21: erste Dampfleitung
- 22: zweite Dampfleitung
- 23: dritte Dampfleitung
- 24: vierte Dampfleitung
- 25: fünfte Dampfleitung
- 21 a: Ventil
- 21 b: Ventil
- 23a: Ventil
- 24a: Ventil
- 25a: Ventil
- 26: Schneidapparat-Kammer
- 27: Schleusenrad
- S23: Druck- und/oder Temperatur- sensor
- S26: Druck- und/oder Terriperatur- sensor

## Patentansprüche

1. Anlage zur kontinuierlichen Herstellung stärke-, fett- oder proteinbasierter, schüttgutartiger Nahrungs- oder Futtermittel oder technischer Zwischenprodukte aus einer stärke-, fett- oder proteinbasierten Wasser aufweisenden Masse, wobei die Anlage die folgenden aufeinanderfolgenden Bereiche aufweist, entlang derer die Masse förderbar ist:
➢ einen ersten Bereich (2; 1, 7a) mit einem ersten Prozessraum (7a), in welchem eine Durchmischung der Masse erfolgt und in die Masse mechanische und/oder thermische Energie eingetragen wird;
➢ einen zweiten Bereich (4; 7b) mit einem zweiten Prozessraum (7b), in welchem ein Druckaufbau in der Masse erfolgt; und
➢ einen dritten Bereich (6) zur Aufnahme der aus dem zweiten Bereich (4; 7b) ausgestossenen Masse;
wobei zwischen dem zweiten Bereich (4; 7b) und dem dritten Bereich (6) eine Umformeinheit (5) angeordnet ist, mit welcher die druckbeaufschlagte Masse vor ihrem Ausstoss in den dritten Bereich (6) zu einer bestimmten Form von Schüttgut umformbar ist;
**dadurch gekennzeichnet, dass** die Anlage zwischen dem ersten Bereich (2; 1, 7a) und dem zweiten Bereich (4; 7b) eine die Förderung der Masse hemmende einstellbare Barriere (3) aufweist, und dass dem dritten Bereich (6) eine Messvorrichtung (S) zugeordnet ist, mit der ein Produktparameter bestimmbar ist, der zu der Schüttdichte und/oder Dichte des schüttgutartigen fertigen Nahrungs- oder Futtermittels oder technischen Zwischenproduktes in dem dritten Bereich (6) in Beziehung steht, wobei die Messvorrichtung (S) über eine Datenübertragungsstrecke (L) mit einer Barriere-Ansteuerungsvorrichtung (A1) verbunden ist, um die einstellbare Barriere (3) in Abhängigkeit von dem durch die Messvorrichtung (S) bestimmbaren Produktparameter einzustellen.

2. Anlage nach Anspruch 1, **dadurch gekennzeichnet, dass** die Datenübertragungsstrecke (L) eine Datenverarbeitungseinheit (V) aufweist, um die von der Messvorrichtung (S) empfangenen Produktparameter-Daten zu Steuerungsdaten für die Barriere-Ansteuerungsvorrichtung (A1) zu verarbeiten.

3. Anlage nach Anspruch 1 oder 2, **dadurch gekennzeichnet, dass** die Messvorrichtung (S) einen Probennehmer zum Entnehmen eines vorbestimmten Schüttgut-Probevolumens und zum Einfüllen des Schüttgut-Probevolumens in eine Messzelle aufweist.

4. Anlage nach Anspruch 3, **dadurch gekennzeichnet, dass** die Messvorrichtung (S) eine Waage zum Bestimmen der Masse des Schüttgut-Probevolumens aufweist.

5. Anlage nach Anspruch 3 oder 4, **dadurch gekennzeichnet, dass** die Messvorrichtung (S) eine Quelle und einen Empfänger für elektromagnetische Strahlung (EM) aufweist, zwischen denen eine die Messzelle durchquerende EM-Strahlungsstrecke besteht.

6. Anlage nach einem der Ansprüche 3 bis 5, **dadurch gekennzeichnet, dass** das Schüttgut des Schüttgut-Probevolumens in der Messzelle der Messvorrichtung (S) fixierbar ist, und dass die Messvorrichtung (S) eine die Messzelle durchquerenden Fluidstrecke zwischen einem Fluideinlass und einem Fluidauslass aufweist.

7. Anlage nach einem der Ansprüche 3 bis 6, **dadurch gekennzeichnet, dass** die Messvorrichtung (S) eine Schallquelle und einen Schallempfänger aufweist, zwischen denen eine die Messzelle durchquerende Schalistrecke besteht.

8. Anlage nach einem der Ansprüche 1 bis 7, **dadurch gekennzeichnet, dass** die Messvorrichtung (S) eine in oder nach dem Bereich (6) angeordnete Prallfläche, die in den im dritten Bereich (6) gebildeten Schüttgutstrom ragt, sowie einen Schallempfänger zur Aufnahme des Schallspektrums des Prallgeräusches aufweist, wobei die Datenverarbeitungseinheit (V) einen Spektrumsanalysator zum Analysieren des aufgenommenen Schallspektrums enthält.

9. Anlage nach einem der Ansprüche 1 bis 8, **dadurch gekennzeichnet, dass** die Messvorrichtung (S) eine Vereinzelungsvorrichtung zum Vereinzeln der Schüttgutteilchen des im dritten Bereich (6) gebildeten Schüttgutstromes sowie ein optisches Abbildungssystem zum Erfassen einer Projektionsfläche der jeweiligen einzelnen Schüttgutteilchen aufweist, wobei die Datenverarbeitungseinheit (V) einen Spektrumsanalysator zum Analysieren des aufgenommenen Projektionsflächen-Spektrums enthält.

10. Anlage nach einem der Ansprüche 1 bis 9, **dadurch gekennzeichnet, dass** die Datenverarbeitungseinheit (V) einen Speicher zum Abspeichern eines Sollparameters enthält, der einer Soll-Schüttdichte des Schüttgutes entspricht, sowie einen Komparator zum Vergleichen eines erfassten Ist-Parameters des Schüttgutes mit dem Sollparameter enthält.

11. Anlage nach einem der Ansprüche 1 bis 10, **dadurch gekennzeichnet, dass** die einstellbare Barriere (3) eine einstellbare Querschnittsverengung ist.

12. Anlage nach einem der Ansprüche 1 bis 11, **dadurch gekennzeichnet, dass** in dem dritten Bereich ein Druck herrscht, der kleiner als der Sättigungsdampfdruck des in der Masse enthaltenen Wassers ist.

13. Anlage nach einem der Ansprüche 1 bis 11, **dadurch gekennzeichnet, dass** in dem dritten Bereich ein Druck herrscht, der grösser als der Sättigungsdampfdruck des in der Masse enthaltenen Wassers ist.

14. Anlage nach einem der Ansprüche 1 bis 13, **dadurch gekennzeichnet, dass** der erste Bereich (2; 1, 7a) und der zweite Bereich (4; 7b) durch den Prozessraum eines Mehrwellen-Extruders, insbesondere eines gleichläufigen Zweiwellen-Extruders (7) gebildet sind.

15. Anlage nach einem der Ansprüche 1 bis 13, **dadurch gekennzeichnet, dass** der erste Bereich durch den Prozessraum eines Mehrwellen-Extruders, insbesondere eines gegenläufigen Zweiwellenextruders, gebildet ist und der zweite Bereich durch den Prozessraum eines Einwellen-Extruders, eines gegenläufigen ZweiwelLen-Extruders oder einer Zahnradpumpe gebildet ist.

16. Anlage nach Anspruch 14 bis 15, **dadurch gekennzeichnet, dass** dem Mehrwellen-Extruder (7) ein Vorkonditionierer (1) vorgeschaltet ist.

17. Anlage nach Anspruch 14, **dadurch gekennzeichnet, dass** die einstellbare Barriere (3) innerhalb eines Längenabschnitts des Mehrwellen-Extruders bzw. des Zweiwellen-Extruders (7) an einem Ort angeordnet ist, der sich zwischen 1/5 und 4/5, insbesondere zwischen 2/5 und 3/5, der Gesamtlänge des Mehrwellen-Extruders bzw. des Zweiwellen-Extruders (7) befindet.

18. Anlage nach Anspruch 15, **dadurch gekennzeichnet, dass** die einstellbare Barriere am förderabseitigen Ende des durch den Mehrwellen-Extruder bzw, den Zweiwellen-Extruder gebildeten ersten Bereichs angeordnet ist.

19. Anlage nach Anspruch 15, **dadurch gekennzeichnet, dass** die einstellbare Barriere am förderaufseiten Ende des durch den Einwellen-Extruder, den gegenläufigen Zweiwellen-Extruder oder die Zahnradpumpe gebildeten zweiten Bereichs angeordnet ist.

20. Anlage nach einem der Ansprüche 14 bis 19, **dadurch gekennzeichnet, dass** die einstellbare Barriere (3) durch einen jeweiligen schneckenfreien, rotationssymmetrischen Abschnitt (8a) der Schneckenwelle bzw. Schneckenwellen (8) des Extruders (7) und mindestens ein relativ zu dem jeweiligen rotationssymmetrischen Abschnitt (8a) bewegbares Sperrglied (9) mit einer zu dem jeweiligen rotationssymmetrischen Abschnitt (8a) komplementären Aussparung (9a) gebildet ist, so dass ein Spalt (10) mit einstellbarer Spaltbreite zwischen dem jeweiligen rotationssymmetrischen Abschnitt (8a) und der komplementären Aussparung (9a) des Sperrglieds (9) vorliegt.

21. Anlage nach einem der vorhergehenden Ansprüche, **dadurch gekennzeichnet, dass** an den zweiten Bereich (4) ein Druckeinstellungsmittel (11; 20) zur Einstellung des in der Masse herrschenden Druckes angeschlossen ist.

22. Anlage nach Anspruch 21, **dadurch gekennzeichnet, dass** das Druckeinstellungsmittel (11; 20) eine Einrichtung zum Verändern der Menge des in der Masse vorliegenden Wassers aufweist.

23. Anlage nach Anspruch 21 oder 22, **dadurch gekennzeichnet, dass** das Druckeinstellungsmittel (11) eine Einrichtung (12, 13, 14) zum wahlweisen Zuführen oder Abführen von Wasserdampf in bzw. aus dem zweiten Bereich (7b) aufweist.

24. Anlage nach Anspruch 23, **dadurch gekennzeichnet, dass** das Druckeinstellungsmittel (11) eine Zufuhrleitung (12) und eine Abfuhrleitung (13, 14) zum Zuführen oder Abführen von Wasserdampf in bzw. aus dem zweiten Bereich (7b) aufweist, wobei die Zufuhrleitung (12) und die Abfuhrleitung (13, 14) wahlweise freigegeben oder gesperrt werden können.

25. Anlage nach Anspruch 24, **dadurch gekennzeichnet, dass** das Druckeinstellungsmittel (11) eine Zufuhrleitung (12), die den zweiten Bereich (7b) mit einem Wasserdampf-Erzeugungssystem verbindet, eine erste Abfuhrleitung (13), die den zweiten Bereich (7b) mit einem Vakuumsystem verbindet, und eine zweite Abfuhrleitung (14), die den zweiten Bereich mit dem ersten Bereich verbindet, aufweist, wobei die Zufuhrleitung (12) sowie die erste und die zweite Abfuhrleitung (13, 14) wahlweise freigegeben oder gesperrt werden können.

26. Anlage nach einem der Ansprüche 1 bis 25, **dadurch gekennzeichnet, dass** die Messvorrichtung (S) einen Drucksensor in dem dritten Bereich (6) aufweist, und dass an den dritten Bereich (6) ein Druckeinstellungsmittel (20) angeschlossen ist, um den Druck in dem dritten Bereich einzustellen.

27. Anlage nach Anspruch 26, **dadurch gekennzeichnet, dass** die Messvorrichtung (S) über eine Datenübertragungsstrecke (L) mit einer Druckeinstellungsmittel-Ansteuerungsvorrichtung (A2) verbunden ist, um das Druckeinstellungsmittel (20) in Abhängigkeit von dem durch die Messvorrichtung (S) bestimmbaren Druck im dritten Bereich (6) einzustellen.

28. Anlage nach Anspruch 27, **dadurch gekennzeichnet, dass** die Datenübertragungsstrecke (L) eine Datenverarbeitungseinheit (V) aufweist, um die von der Messvorrichtung (S) empfangenen Produktparameter-Daten oder Druckwerte aus dem dritten Bereich (6) zu Steuerungsdaten für die Druckeinstellungsmittel-Ansteuerungsvorrichtung (A2) zu verarbeiten.

29. Anlage nach einem der vorhergehenden Ansprüche, **dadurch gekennzeichnet, dass** die Umformeinheit (5) eine Düsenplatte mit einem rotierbaren Schneidmesser ist.

30. Verfahren zur kontinuierlichen Herstellung stärke-, fett- oder proteinbasierter, schüttgutartiger Nahrungs- oder Futtermittel oder technischer Zwischenprodukte aus einer stärke-, fett- oder proteinbasierten Wasser aufweisenden Masse unter Verwendung einer Anlage gemäss einem der Ansprüche 1 bis 29, wobei das Verfahren die folgenden aufeinanderfolgenden Schritte in aufeinanderfolgenden Bereichen aufweist:
a) Fördern der Masse durch einen ersten Bereich hindurch, welcher einen ersten Prozessraum aufweist, wobei die Masse unter Eintragung mechanischer und/oder thermischer Energie durchmischt und geknetet wird und das Wasser auf die Masse einwirkt;
b) Fördern der Masse durch einen zweiten Bereich hindurch, welcher einen zweiten Prozessraum aufweist, wobei in der Masse Druck aufgebaut wird;
c) Umformen der druckbeaufschlagten Masse mittels einer zwischen dem zweiten Bereich und einem dritten Bereich angeordneten Umformeinheit;
d) Ausstossen der druckbeaufschlagten und geformten Masse in Form eines Schüttgutes in den dritten Bereich;
**dadurch gekennzeichnet, dass** die Einstellung des in dem ersten Bereich stattfindenden spezifischen mechanischen Energieeintrags (SME) in die Masse durch Einstellen einer die Förderung der Masse zwischen dem ersten Bereich und dem zweiten Bereich hemmenden Barriere erfolgt, und dass in dem dritten Bereich mittels einer Messvorrichtung ein Produktparameter bestimmt wird, der zu der Schüttdichte und/oder Dichte des fertigen Nahrungs- oder Futtermittels oder technischen Zwischenproduktes in Beziehung steht, wobei das Einstellen der Barriere in Abhängigkeit von dem in der Messvorrichtung bestimmten Produktparameter erfolgt.

31. Verfahren nach Anspruch 30, **dadurch gekennzeichnet, dass** der in der Messvorrichtung bestimmte Istwert des Produktparameters mit einem vorbestimmten Sollwert des Produktparameters verglichen wird und das Einstellen der Barriere in Abhängigkeit von der Istwert/Sollwert-Abweichung des Produktparameters erfolgt.

32. Verfahren nach Anspruch 30 oder 31, **dadurch gekennzeichnet, dass** ein Schüttgut-Probevolumen aus dem Schüttgutstrom in dem dritten Bereich entnommen wird und mindestens eine der folgenden Messgrössen als Produktparameter bestimmt und verwendet wird bzw. werden:
➢ Masse des Schüttgut-Probevolumens
➢ Abschwächung elektromagnetischer Strahlung, insbesondere von GammaStrahlung, beim Durchtritt durch das Schüttgut-Probevolumen
➢ Ausbreitungsgeschwindigkeit elektromagnetischer Strahlung, insbesondere von Mikrowellenstrahlung, beim Durchtritt durch das Schüttgut-Probevolumen
➢ Druckabfall eines Fluids, insbesondere von Druckluft, beim Durchtritt durch das fixierte Schüttgut-Probevolumen
➢ Abschwächung mechanischer Wellen, insbesondere von Schallwellen, beim Durchtritt durch das Schüttgut-Probevolumen.

33. Verfahren nach einem der Ansprüche 30 bis 32, **dadurch gekennzeichnet, dass** als Produktparameter das Schall-Spektrum des Prallgeräusches erfasst wird, das der Schüttgutstrom in oder nach dem dritten Bereich erzeugt, wenn er auf eine Prallfläche auftrifft bzw. umgelenkt wird.

34. Verfahren nach einem der Ansprüche 30 bis 32, **dadurch gekennzeichnet, dass** die Teilchen des Schüttgutstromes aus dem dritten Bereich vereinzelt werden und jedes Schüttgutteilchen optisch separat erfasst und als Produktparameter das Projektionsflächen-Spektrum verwendet wird.

35. Verfahren nach einem der Ansprüche 30 bis 34, **dadurch gekennzeichnet, dass** der Druck in dem dritten Bereich gemessen wird.

36. Verfahren nach einem der Ansprüche 30 bis 35, **dadurch gekennzeichnet, dass** in dem dritten Bereich ein Druck herrscht, der kleiner als der Sättigungsdampfdruck des in der Masse enthaltenen Wassers ist, so dass die unter Druck stehende geformte Masse bei ihrem Eintritt in den dritten Bereich expandiert.

37. Verfahren nach einem der Ansprüche 30 bis 35, **dadurch gekennzeichnet, dass** in dem dritten Bereich ein Druck herrscht, der grösser als der Sättigungsdampfdruck des in der Masse enthaltenen Wassers ist, so dass die unter Druck stehende geformte Masse bei ihrem Eintritt in den dritten Bereich nicht expandiert.

38. Verfahren nach einem der Ansprüche 30 bis 37, **dadurch gekennzeichnet, dass** in dem zweiten Bereich eine Einstellung des in der Masse herrschenden Druckes erfolgt.

39. Verfahren nach Anspruch 36, **dadurch gekennzeichnet, dass** die Einstellung des Druckes durch Zuführen oder Abführen von Wasserdampf in dem zweiten Bereich erfolgt, um den Wassergehalt bzw. die Produktfeuchte der Masse zu verändern.

40. Verfahren nach Anspruch 39, **dadurch gekennzeichnet, dass** wahlweise dem zweiten Bereich Wasserdampf von einem Wasserdampf-Erzeugungssystem zugeführt wird oder dem zweiten Bereich Wasserdampf zu einem Vakuumsystem entzogen wird oder aus dem zweiten Bereich Wasserdampf in den ersten Bereich zurückgeführt wird.

## Claims

1. A facility for the continuous production of starch-based, fat-based, or protein-based bulk-type foodstuffs or feed or technical intermediate products made of a starch-based, fat-based, or protein-based compound having water, the facility having the following sequential areas, along which the compound is conveyable;
- a first area (2; 1, 7a) having a first processing chamber (7a), in which the compound is mixed and mechanical and/or thermal energy is introduced into the compound;
- a second area (4; 7b) having a second processing chamber (7b), in which a pressure buildup in the compound occurs; and
- a third area (6) for receiving the compound ejected from the second area (4; 7b);
a reshaping unit (5) being situated between the second area (4; 7b) and the third area (6), using which the pressure-impinged compound may be reshaped into a specific form of bulk product before it is ejected into the third area (6);
**characterized in that** the facility has an adjustable barrier (3) which inhibits the conveyance of the compound between the first area (2; 1, 7a) and the second area (4; 7b), and a measuring device (S) is assigned to the third area (6), using which a product parameter may be determined, which is related to the bulk density and/or density of the bulk-type finished foodstuff or feed or technical intermediate product in the third area (6), the measuring device (S) being connected via a data transmission link (L) to a barrier activation device (A1), to adjust the adjustable barrier (3) as a function of the product parameter which may be determined by the measuring device (S).

2. The facility according to Claim 1, **characterized in that** the data transmission link (L) has a data processing unit (V), to process the product parameter data received from the measuring device (S) into control data for the barrier activation device (A1).

3. The facility according to Claim 1 or 2, **characterized in that** the measuring device (S) has a sample taker for removing a predetermined bulk product sample volume and decanting the bulk product sample volume into a measuring cell.

4. The facility according to Claim 3, **characterized in that** the measuring device (S) has a set of scales for determining the mass of the bulk product sample volume.

5. The facility according to Claim 3 or 4, **characterized in that** the measuring device (S) has a source and a receiver for electromagnetic radiation (EM), between which an electromagnetic radiation pathway traversing the measuring cell exists.

6. The facility according to one of Claims 3 through 5, **characterized in that** the bulk product of the bulk product sample volume may be fixed in the measuring cell of the measuring device (S), and the measuring device (S) has a fluid pathway traversing the measuring cell between a fluid inlet and a fluid outlet.

7. The facility according to one of Claims 3 through 6, **characterized in that** the measuring device (S) has a sound source and a sound receiver, between which a sound pathway traversing the measuring cell exists.

8. The facility according to one of Claims 1 through 7, **characterized in that** the measuring device (S) has an impact surface situated in or after the third area (6), which projects into the bulk product flow formed in the third area (6), as well as a sound receiver for recording the sound spectrum of the impact noise, the data processing unit (V) containing a spectrum analyzer for analyzing the recorded sound spectrum.

9. The facility according to one of Claims 1 through 8, **characterized in that** the measuring device (S) has an isolation device for isolating the bulk product particles of the bulk product flow formed in the third area (6) as well as an optical imaging system for detecting a projection area of the particular individual bulk product particles, the data processing unit (V) containing a spectrum analyzer for analyzing the recorded projection area spectrum.

10. The facility according to one of Claims 1 through 9, **characterized in that** the data processing unit (V) contains a memory for storing a setpoint parameter, which corresponds to a setpoint bulk density of the bulk product, as well as a comparator for comparing a detected actual parameter of the bulk product to the setpoint parameter.

11. The facility according to one of Claims 1 through 10, **characterized in that** the adjustable barrier (3) is an adjustable cross-sectional constriction.

12. The facility according to one of Claims 1 through 11, **characterized in that** a pressure exists in the third area which is less than the saturation vapor pressure of the water contained in the compound.

13. The facility according to one of Claims 1 through 11, **characterized in that** a pressure exists in the third area which is greater than the saturation vapor pressure of the water contained in the compound.

14. The facility according to one of Claims 1 through 13, **characterized in that** the first area (2; 1, 7a) and the second area (4; 7b) are formed by the processing chamber of a multishaft extruder, in particular a synchronous dual-shaft extruder (7).

15. The facility according to one of Claims 1 through 13, **characterized in that** the first area is formed by the processing chamber of a multishaft extruder, in particular of a contradirectional dual-shaft extruder, and the second area is formed by the processing chamber of a single-shaft extruder, a contradirectional dual-shaft extruder, or a gearwheel pump.

16. The facility according to Claims 14 through 15, **characterized in that** a pre-conditioner (1) is connected upstream from the multishaft extruder (7).

17. The facility according to Claim 14, **characterized in that** the adjustable barrier (3) is situated within a longitudinal section of the multishaft extruder or the dual-shaft extruder (7) at a location which is located between 1/5 and 4/5, in particular between 2/5 and 3/5 of the overall length of the multishaft extruder or the dual-shaft extruder (7).

18. The facility according to Claim 15, **characterized in that** the adjustable barrier is situated at the end of the first area formed by the multishaft extruder or the dual-shaft extruder downstream from the conveyor.

19. The facility according to Claim 15, **characterized in that** the adjustable barrier is situated at the end of the second area formed by the single-shaft extruder, the contradirectional dual-shaft extruder, or the gearwheel pump upstream from the conveyor.

20. The facility according to one of Claims 14 through 19, **characterized in that** the adjustable barrier (3) is formed by a particular screw-free, rotationally-symmetrical section (8a) of the screw shaft (s) (8) of the extruder (7) and at least one blocking element (9), movable in relation to the particular rotationally-symmetrical section (8a), having an opening (9a) complementary to the particular rotationally-symmetrical section (8a), so that a gap (10) having an adjustable gap width exists between the particular rotationally-symmetrical section (8a) and the complementary opening (9a) of the blocking element (9).

21. The facility according to one of the preceding claims, **characterized in that** pressure adjustment means (11; 20) for adjusting the pressure existing in the compound are connected to the second area (4).

22. The facility according to Claim 21, **characterized in that** the pressure adjustment means (11; 20) have an apparatus for changing the quantity of the water existing in the compound.

23. The facility according to Claim 21 or 22, **characterized in that** the pressure adjustment means (11) have an apparatus (12, 13, 14) for alternately supplying or draining water steam to or from the second area (7b).

24. The facility according to Claim 23, **characterized in that** the pressure adjustment means (11) have a supply line (12) and a drain line (13, 14) for supplying or draining water steam to or from the second area (7b), the supply line (12) and the drain line (13, 14) alternately being able to be released or blocked.

25. The facility according to Claim 24, **characterized in that** the pressure adjustment means (11) have a supply line (12), which connects the second area (7b) to a water steam generation system, a first drain line (13), which connects the second area (7b) to a vacuum system, and a second drain line (14), which connects the second area to the first area, the supply line (12) and the first and second drain lines (13, 14) alternately being able to be released or blocked.

26. The facility according to one of Claims 1 through 25, **characterized in that** the measuring device (S) has a pressure sensor in the third area (6), and pressure adjustment means (20) are connected to the third area (6) to adjust the pressure in the third area.

27. The facility according to Claim 26, **characterized in that** the measuring device (S) is connected via a data transmission link (L) to a pressure adjustment means activation device (A2), to adjust the pressure adjustment means (20) as a function of the pressure in the third area (6), which may be determined by the measuring device (S).

28. The facility according to Claim 27, **characterized in that** the data transmission link (L) has a data processing unit (V) to process the product parameter data received from the measuring device (S) or pressure values from the third area (6) into control data for the pressure adjustment means activation device (A2).

29. The facility according to one of the preceding claims, **characterized in that** the reshaping unit (5) is a nozzle plate having a rotatable blade cutter.

30. A method for the continuous production of starch-based, fat-based, or protein-based bulk-type foodstuffs or feed or technical intermediate products made of a starch-based, fat-based, or protein-based compound having water using a facility according to one of Claims 1 through 29, the method having the following sequential steps in sequential areas:
a) conveying the compound through a first area, which has a first processing chamber, the compound being mixed and kneaded with the introduction of mechanical and/or thermal energy and the water acting on the compound;
b) conveying the compound through a second area, which has a second processing chamber, pressure being built up in the compound;
c) reshaping the pressure-impinged compound using a reshaping unit situated between the second area and a third area;
d) ejecting the pressure-impinged and molded compound into the third area in the form of a bulk product;
**characterized in that** the specific mechanical energy input (SME) into the compound occurring in the first area is adjusted by adjusting a barrier inhibiting the conveyance of the compound between the first area and the second area, and a product parameter is determined in the third area using a measuring device, which is related to the bulk density and/or density of the finished foodstuff or feed or technical intermediate product, the barrier being adjusted as a function of the product parameter determined in the measuring device.

31. The method according to Claim 30, **characterized in that** the actual value of the product parameter determined in the measuring device is compared to a predetermined setpoint value of the product parameter and the barrier is adjusted as a function of the actual value/setpoint value deviation of the product parameter.

32. The method according to Claim 30 or 31, **characterized in that** a bulk product sample volume is taken from the bulk product flow in the third area and at least one of the following measured variables is determined and used as a product parameter:
- mass of the bulk product sample volume
- attenuation of electromagnetic radiation, in particular of gamma radiation, during passage through the bulk product sample volume
- propagation speed of electromagnetic radiation, in particular of microwave radiation, during passage through the bulk product sample volume
- pressure drop of a fluid, in particular compressed air, during passage through the fixed bulk product sample volume
- attenuation of mechanical waves, in particular of sound waves, during passage through the bulk product sample volume.

33. The method according to one of Claims 30 through 32, **characterized in that** the sound spectrum of the impact noise which the bulk product flow generates in or after the third area when it hits or is deflected by an impact surface is detected as a product parameter.

34. The method according to one of Claims 30 through 32, **characterized in that** the particles of the bulk product flow from the third area are isolated and each bulk product particle is separately detected optically and the projection area spectrum is used as a product parameter.

35. The method according to one of Claims 30 through 34, **characterized in that** the pressure in the third area is measured.

36. The method according to one of Claims 30 through 35, **characterized in that** a pressure exists in the third area which is less than the saturation vapor pressure of the water contained in the compound, so that the molded compound under pressure expands upon its entry into the third area.

37. The method according to one of Claims 30 through 35, **characterized in that** a pressure exists in the third area which is greater than the saturation vapor pressure of the water contained in the compound, so that the molded compound under pressure does not expand upon its entry into the third area.

38. The method according to one of Claims 30 through 37, **characterized in that** the pressure existing in the compound is adjusted in the second area.

39. The method according to Claim 36, **characterized in that** the pressure is adjusted by supplying or draining water steam to or from the second area to change the water content or the product moisture of the compound.

40. The method according to Claim 39, **characterized in that** alternately water steam is supplied by a water steam generating system to the second area or water steam is withdrawn to a vacuum system from the second area or water steam is returned to the first area from the second area.

## Revendications

1. Installation pour la production continue de produits alimentaires ou fourragers sur base d'amidons, de graisses ou de protéines ou de produits techniques semi-ouvrés composés d'une masse sur base d'amidon, de graisses ou de protéines comportant de l'eau sous forme de produits en vrac, l'installation comportant les zones successives suivantes, le long desquels la masse est transportable :
➢ une première zone (2 ; 1, 7a) avec un premier espace de procédé (7a), dans lequel la masse est intimement mélangée et de l'énergie mécanique et/ou thermique est introduite dans la masse ;
➢ une deuxième zone (4 ; 7b) avec un deuxième espace de procédé (7b), dans lequel une pression s'établit dans la masse ; et
➢ une troisième zone (6) pour recevoir la masse expulsée de la deuxième zone (4 ; 7b) ;
entre la deuxième zone (4 ; 7b) et la troisième zone (6) étant disposée une unité de refaçonnage (5) à l'aide de laquelle la masse sous pression est susceptible d'être refaçonnée en une forme précise, avant son expulsion dans la troisième zone (6) ;
**caractérisée en ce que** l'installation comporte entre la première zone (2 ; 1, 7a) et la deuxième zone (4 ; 7b) une barrière (3) réglable inhibant le transport de la masse et **en ce qu'**il est associé à la troisième zone (6) un dispositif de mesure (S), permettant de déterminer un paramètre du produit, qui est en rapport avec la densité en vrac et/ou la densité du produit alimentaire ou
fourrager ou du produit technique semi-ouvré fini sous forme de produit en vrac dans la troisième zone (6), le dispositif de mesure (S) étant relié via une voie de transmission de données (L) avec un dispositif de contrôle de la barrière (A1) pour régler la barrière (3) réglable en fonction du paramètre du produit pouvant être déterminé par le dispositif de mesure (S).

2. Installation selon la revendication 1, **caractérisée en ce que** la voie de transmission de données (L) comporte une unité de traitement des données (V) pour traiter les données relatives au paramètre du produit réceptionnées par le dispositif de mesure (S) en données de commande pour le dispositif de contrôle de la barrière (A1).

3. Installation selon la revendication 1 ou 2, **caractérisée en ce que** le dispositif de mesure (S) comporte un échantillonneur pour prélever un volume échantillon de produit en vrac prédéfini et pour remplir une cellule de mesure avec le volume échantillon de produit en vrac.

4. Installation selon la revendication 3, **caractérisée en ce que** le dispositif de mesure (S) comporte une balance pour déterminer la masse du volume échantillon de produit en vrac.

5. Installation selon la revendication 3 ou 4, **caractérisée en ce que** le dispositif de mesure (S) comporte une source et un récepteur de rayonnement électromagnétique (EM) entre lesquels se trouve un trajet de rayonnement EM traversant la cellule de mesure.

6. Installation selon l'une quelconque des revendications 3 à 5, **caractérisée en ce que** le produit en vrac du volume échantillon de produit en vrac est susceptible d'être fixé dans la cellule de mesure du dispositif de mesure (S) et **en ce que** le dispositif de mesure (S) comporte entre une entrée de fluide et une sortie de fluide un trajet de fluide traversant la cellule de mesure.

7. Installation selon l'une quelconque des revendications 3 à 6, **caractérisée en ce que** le dispositif de mesure (S) comporte une source sonore et un récepteur sonore, entre lesquels se trouve un trajet sonore traversant la cellule de mesure.

8. Installation selon l'une quelconque des revendications 1 à 7, **caractérisée en ce que** le dispositif de mesure (S) comporte une surface d'impact disposée dans ou en aval de la zone (6) qui saillit dans le flux de produit en vrac formé dans la troisième zone (6), ainsi qu'un récepteur sonore, pour enregistrer le spectre sonore du bruit d'impact, l'unité de traitement des données (V) comprenant un analyseur de spectre pour analyser le spectre sonore enregistré.

9. Installation selon l'une quelconque des revendications 1 à 8, **caractérisée en ce que** le dispositif de mesure (S) comporte un dispositif de désolidarisation pour désolidariser les particules de produit en vrac dans le flux de produit en vrac formé dans la troisième zone (6), ainsi qu'un système de reproduction optique pour détecter une surface de projection des particules de produit en vrac individuelles respectives, l'unité de traitement des données (V) comprenant un analyseur de spectre, pour analyser le spectre de la surface de projection enregistré.

10. Installation selon l'une quelconque des revendications 1 à 9, **caractérisée en ce que** l'unité de traitement des données (V) comprend une mémoire pour sauvegarder un paramètre de consigne qui correspond à une densité en vrac de consigne pour le produit en vrac, ainsi qu'un comparateur pour comparer un paramètre réel détecté du produit en vrac avec le paramètre de consigne.

11. Installation selon l'une quelconque des revendications 1 à 10, **caractérisée en ce que** la barrière (3) réglable est un rétrécissement de section transversale réglable.

12. Installation selon l'une quelconque des revendications 1 à 11, **caractérisée en ce que** dans la troisième zone, il règne une pression qui est inférieure à la pression de la vapeur de saturation de l'eau contenue dans la masse.

13. Installation selon l'une quelconque des revendications 1 à 11, **caractérisée en ce que** dans la troisième zone, il règne une pression qui est supérieure à la pression de la vapeur de saturation de l'eau contenue dans la masse.

14. Installation selon l'une quelconque des revendications 1 à 13, **caractérisée en ce que** la première zone (2 ; 1, 7a) et la deuxième zone (4 ; 7b) sont formées par l'espace de procédé d'une extrudeuse à arbres multiples, notamment d'une extrudeuse à deux arbres (7) tournant dans le même sens.

15. Installation selon l'une quelconque des revendications 1 à 13, **caractérisée en ce que** la première zone est formée par l'espace de procédé d'une extrudeuse à arbres multiples, notamment d'une extrudeuse à deux arbres tournant en sens opposé, et **en ce que** la deuxième zone est formée par l'espace de procédé d'une extrudeuse mono-arbre, d'une extrudeuse à deux arbres tournant en sens opposé ou d'une pompe à engrenages.

16. Installation selon les revendications 14 à 15, **caractérisée en ce qu'**un préconditionneur (1) est monté en amont de l'extrudeuse à arbres multiples (7).

17. Installation selon la revendication 14, **caractérisée en ce que** la barrière réglable (3) est disposée à l'intérieur d'un tronçon longitudinal de l'extrudeuse à arbres multiples ou de l'extrudeuse à deux arbres (7), à un emplacement qui se trouve entre 1/5 et 4/5, notamment entre 2/5 et 3/5 de la longueur totale de l'extrudeuse à arbres multiples ou de l'extrudeuse à deux arbres (7).

18. Installation selon la revendication 15, **caractérisée en ce que** la barrière réglable est disposée sur l'extrémité en aval du transport de la première zone formée par l'extrudeuse à arbres multiples ou par l'extrudeuse à deux arbres.

19. Installation selon la revendication 15, **caractérisée en ce que** la barrière réglable est disposée sur l'extrémité en amont du transport de la deuxième zone formée par l'extrudeuse mono-arbre, par l'extrudeuse à deux arbres tournant en sens opposé ou par la pompe à engrenages.

20. Installation selon l'une quelconque des revendications 14 à 19, **caractérisée en ce que** la barrière réglable (3) est formée par un tronçon (8a) sans vis respectif, symétrique en rotation de l'arbre de vis ou des arbres de vis (8) de l'extrudeuse (7) et par au moins un organe de blocage (9) mobile par rapport au tronçon (8a) symétrique en rotation concerné, avec un évidement (9a) complémentaire au tronçon (8a) symétrique en rotation concerné, de sorte à ménager un interstice (10) à largeur d'interstice réglable entre le tronçon (8a) symétrique en rotation concerné et l'évidement (9a) complémentaire de l'organe de blocage (9).

21. Installation selon l'une quelconque des revendications précédentes, **caractérisée en ce que** sur la deuxième zone (4) est raccordé un moyen de réglage de la pression (11 ; 20) pour le réglage de la pression régnant dans la masse.

22. Installation selon la revendication 21, **caractérisée en ce que** le moyen de réglage de la pression (11 ; 20) comporte un dispositif pour modifier la quantité de l'eau présente dans la masse.

23. Installation selon la revendication 21 ou 22, **caractérisée en ce que** le moyen de réglage de la pression (11) comporte un dispositif (12, 13, 14) pour alimenter ou évacuer au choix de la vapeur d'eau dans ou hors de la deuxième zone (7b).

24. Installation selon la revendication 23, **caractérisée en ce que** le moyen de réglage de la pression (11) comporte un conduit d'alimentation (12) et un conduit d'évacuation (13, 14) pour alimenter ou pour évacuer de la vapeur d'eau dans ou hors de la deuxième zone (7b), le conduit d'alimentation (12) et le conduit d'évacuation (13, 14) pouvant être libérés ou fermés au choix.

25. Installation selon la revendication 24, **caractérisée en ce que** le moyen de réglage de la pression (11) comporte un conduit d'alimentation (12) reliant la deuxième zone (7b) avec un système de génération de vapeur d'eau, un premier conduit d'évacuation (13), reliant la deuxième zone (7b) à un système de vide et un deuxième conduit d'évacuation (14) reliant la deuxième zone avec la première zone, le conduit d'alimentation (12) ainsi que le premier et le deuxième conduits d'évacuation (13, 14) pouvant être libérés ou fermés au choix.

26. Installation selon l'une quelconque des revendications 1 à 25, **caractérisée en ce que** le dispositif de mesure (S) comporte un capteur de pression dans la troisième zone (6) et **en ce qu'**il est raccordé sur la troisième zone (6) un moyen de réglage de la pression (20) pour régler la pression dans la troisième zone.

27. Installation selon la revendication 26, **caractérisée en ce que** le dispositif de mesure (S) est relié via une voie de transmission de données (L) avec un dispositif de contrôle du moyen de réglage de la pression (A2), pour régler le moyen de réglage de la pression (20) en fonction de la pression déterminable par le dispositif de mesure (S) dans la troisième zone (6).

28. Installation selon la revendication 27, **caractérisée en ce que** la voie de transmission de données (L) comporte une unité de traitement des données (V) pour traiter les données relatives au paramètre du produit ou les valeurs de pression de la troisième zone (6) réceptionnées par le dispositif de mesure (S) en données de commande pour le dispositif de contrôle du moyen de réglage de la pression (A2).

29. Installation selon l'une quelconque des revendications précédentes, **caractérisée en ce que** l'unité de refaçonnage (5) est un corps de filière avec un couteau rotatif.

30. Procédé de production continue de produits alimentaires ou fourragers sur base d'amidons, de graisses ou de protéines ou de produits techniques semi-ouvrés composés d'une masse sur base d'amidon, de graisses ou de protéines comportant de l'eau sous forme de produits en vrac, en utilisant une installation selon l'une quelconque des revendications 1 à 29, le procédé comportant les étapes successives suivantes dans des zones successives :
a) transport de la masse à travers une première zone, laquelle comporte un premier espace de procédé, la masse étant mélangée intimement et malaxée sous introduction d'énergie mécanique et/ou thermique et l'eau agissant sur la masse ;
b) transport de la masse à travers une deuxième zone, laquelle comporte un deuxième espace de procédé, de la pression s'établissant dans la masse ;
c) refaçonnage de la masse sous pression au moyen d'une unité de refaçonnage disposée entre la deuxième zone et la troisième zone ;
d) expulsion de la masse sous pression et façonnée sous la forme d'un produit en vrac dans la troisième zone ;
**caractérisé en ce que** le réglage de l'introduction spécifique d'énergie mécanique (SME) dans la masse se déroulant dans la première zone s'effectue par réglage d'une barrière inhibant le transport de la masse entre la première zone et la deuxième zone et **en ce que** dans la troisième zone, il est déterminé au moyen d'un dispositif de mesure un paramètre du produit qui est en rapport avec la densité en vrac et/ou la densité du produit alimentaire ou fourrager ou du produit technique semi-ouvré fini, le réglage de la barrière s'effectuant en fonction du paramètre du produit déterminé dans le dispositif de mesure.

31. Procédé selon la revendication 30, **caractérisé en ce que** la valeur réelle du paramètre du produit déterminée dans le dispositif de mesure est comparée avec une valeur de consigne prédéfinie pour le paramètre du produit et **en ce que** le réglage de la barrière s'effectue en fonction de l'écart entre la valeur réelle et la valeur de consigne pour le paramètre du produit.

32. Procédé selon la revendication 30 ou 31, **caractérisé en ce qu'**un volume échantillon de produit en vrac est prélevé dans le flux de produit en vrac dans la troisième zone et **en ce qu'**au moins l'une des grandeurs de mesure suivantes est ou sont déterminée(s) en tant que paramètre du produit et utilisée(s) :
➢ masse du volume échantillon de produit en vrac
➢ atténuation du rayonnement électromagnétique, notamment du rayonnement gamma au passage à travers le volume échantillon de produit en vrac
➢ vitesse de propagation du rayonnement électromagnétique, notamment du rayonnement de micro-ondes au passage à travers le volume échantillon de produit en vrac
➢ chute de pression d'un fluide, notamment d'air comprimé, au passage à travers le volume échantillon fixé de produit en vrac
➢ atténuation d'ondes mécaniques, notamment d'ondes sonores, au passage à travers le volume échantillon de produit en vrac.

33. Procédé selon l'une quelconque des revendications 30 à 32, **caractérisé en ce qu'**on détecte en tant que paramètre du produit le spectre sonore du bruit d'impact généré par le flux de produit en vrac dans ou en aval de la troisième zone, lorsqu'il arrive ou est dévié sur une surface d'impact.

34. Procédé selon l'une quelconque des revendications 30 à 32, **caractérisé en ce que** les particules du flux de produit en vrac sortant de la troisième zone sont désolidarisées et **en ce que** chaque particule de produit en vrac est détectée optiquement de manière séparée et **en ce que** le spectre des surfaces de projections est utilisé en tant que paramètre du produit.

35. Procédé selon l'une quelconque des revendications 30 à 34, **caractérisé en ce que** la pression est mesurée dans la troisième zone.

36. Procédé selon l'une quelconque des revendications 30 à 35, **caractérisé en ce que** dans la troisième zone, il règne une pression qui est inférieure à la pression de la vapeur de saturation de l'eau contenue dans la masse, de sorte que la masse façonnée sous pression soit soumise à une expansion lors de son entrée dans la troisième zone.

37. Procédé selon l'une quelconque des revendications 30 à 35, **caractérisé en ce que** dans la troisième zone, il règne une pression qui est supérieure à la pression de la vapeur de saturation de l'eau contenue dans la masse, de sorte que la masse façonnée sous pression ne soit soumise à aucune expansion lors de son entrée dans la troisième zone.

38. Procédé selon l'une quelconque des revendications 30 à 37, **caractérisé en ce que** dans la deuxième zone est effectué un réglage de la pression régnant dans la masse.

39. Procédé selon la revendication 36, **caractérisé en ce que** le réglage de la pression s'effectue par alimentation ou par évacuation de vapeur d'eau dans la deuxième zone, pour modifier la teneur en eau ou l'humidité du produit dans la masse.

40. Procédé selon la revendication 39, **caractérisé en ce qu'**au choix, de la vapeur d'eau est alimentée dans la deuxième zone par un système de génération de vapeur d'eau ou **en ce que** de la vapeur d'eau est prélevée dans la deuxième zone vers un système de vide ou **en ce que** de la vapeur d'eau est ramenée de la deuxième zone dans la première zone.
